# EUROPÄISCHE PATENTSCHRIFT

(11) **EP 2 655 511 B1**
(45) Veröffentlichungstag und Bekanntmachung des Hinweises auf die Patenterteilung: **06.04.2016**
(21) Anmeldenummer: 11804554.1
(22) Anmeldetag: 20.12.2011
(51) Int. Cl.: C08F 297/04, C08L 9/06

(54) **THERMOPLASTISCHE ELASTOMER-ZUSAMMENSETZUNG UND VERFAHREN ZU DEREN HERSTELLUNG**
THERMOPLASTIC ELASTOMER COMPOSITION AND METHOD FOR THE PRODUCTION THEREOF
COMPOSITION D'ÉLASTOMÈRE THERMOPLASTIQUE ET SON PROCÉDÉ DE PRÉPARATION

(30) Priorität: 23.12.2010 EP 10196771
(43) Veröffentlichungstag der Anmeldung: 30.10.2013
(73) Patentinhaber: INEOS Styrolution Europe GmbH, 60325 Frankfurt am Main (DE)
(72) Erfinder: KNOLL, Konrad, 68199 Mannheim (DE); BREITSCHEIDEL, Boris, 67165 Waldsee (DE); STENGEL, Ulrik, 69488 Nieder-Liebersbach (DE)
(74) Vertreter: Jacobi, Markus Alexander
(86) Internationale Anmeldenummer: PCT/EP2011/073358
(87) Internationale Veröffentlichungsnummer: WO 2012/084914

(56) Entgegenhaltungen:
- DE-A1- 19 920 257
- DE-A1-102008 024 214
- US-A1- 2007 078 206

## Beschreibung

Die Erfindung betrifft eine thermoplastische Elastomer-Zusammensetzung, enthaltend Blockcopolymere aus Hartblöcken A aus vinylaromatischen Monomeren und einem oder mehreren statistischen Weichblöcke B unhydrierten oder hydrierten Blockcopolymerisaten aus Dienen und vinylaromatischen Monomeren und Plastifizierungsmitteln mit einer höheren Polarität als Weißöl und einer geringeren Polarität als Dinonyladipat sowie die Verwendung der Formmassen zur Herstellung von flexiblen und elastischen Formkörpern und die daraus hergestellten Formkörper.

Thermoplastische Elastomer-Zusammensetzungen auf Basis von hydrierten oder unhydrierten Styrol-Butadien oder Styrol-Isopren Blockcopolymeren (S-TPE) und gegebenenfalls Polyolefinen sind z.B. aus EP-A 583 228, EP-A 623 651, EP-A 712 892 oder EP-A 845 498 bekannt. Durch die Wahl der Hilfsstoffe und die Mischungsverhältnisse lassen sich die Materialeigenschaften wie Elastizität, Härte, Zugfestigkeit oder Haftung in weiten Bereichen einstellen. Als Weichmacher werden üblicherweise aromatenarme paraffinische Öle, naphthenische Öle oder oligomere Polybutadiene eingesetzt.

Thermoplastische Elastomere (TPE) oder Elastomer-Zusammensetzungen auf Basis von Blockcopolymeren aus Styrol und Butadien mit einem oder mehreren statistischen Weichblöcken B/S sind aus WO 1995/35335, WO 1996/20248 und WO 1998/12240 bekannt. Sie weisen gegenüber thermoplastischen Elastomeren mit einer Weichphase aus einem reinen Butadienblock eine bessere Verarbeitbarkeit, bessere Witterungsbeständigkeit bessere thermische Schmelzestabilität sowie eine bessere Bedruckbarkeit und Bemalbarkeit z.B. mit Lacken auf und sind im Zweikomponentenspritzguss mit anderen Styrolpolymerisaten kombinierbar.

Aus der WO 2000/66662 sind thermoplastische Elastomer-Zusammensetzungen bekannt, wobei die Blockcopolymeren a) aus Hartblöcken S aus vinylaromatischen Monomeren und ein oder mehreren statistischen Weichblöcken B/S aus Dienen und vinylaromatischen Monomeren aufgebaut sind. Diese thermoplastischen Elastomer-Zusammensetzungen lassen in ihrer Alterungsbeständigkeit und Verarbeitungsstabilität zu wünschen übrig, wenn ungesättigte Pflanzenöle wie Sonnenblumenöl verwendet werden. Weiterhin führen Ölmischungen aus aliphatischen Estern, die unpolarer als Diisooctylphthalat und polarer als Dinonyladipat sind, wie beispielsweise Dioctyladipat, zu einer starken Absenkung der Polystyrolhartphase und damit zu einer niederen Wärmeformbeständigkeit und starken Kriechneigung. Auch andere Ester wie Citronensäureester mit kürzeren Alkoholen, die PVC besonders gut plastifizieren, führen zu dem beschiebenen unvorteilhaften Effekt.

Aufgrund der höheren Polarität der Weichblöcke B/S sind diese Blockcopolymeren nur begrenzt mit Weißölen verträglich, die üblicherweise als Plastifizierungsmittel für klassische S-TPE eingesetzt werden.

DE 1999 20 257 A1 betrifft eine thermoplastische Elastomer-Zusammensetzung, welche aus 5 bis 99 Gew.-% eines Blockcopolymeren, das aus Hartblöcken A aus vinylaromatischen Monomeren und statistischen Weichblöcken B/S aus Dienen und vinylaromatischen Monomeren aufgebaut ist, und darüber hinaus 1 bis 95 Gew.-% eines Plastifizierungsmittels mit einer höheren Polarität als Weißöl und einer geringeren Polarität als Diisooctylphthalat enthält. Das Plastifizierungsmittel ist ein Ester, Amid oder Ether mit einem aliphatischen Rest mit 12 bis 18 Kohlenstoffatomen. Bevorzugt sind Fettalkoholester der Zitronensäure, Adipinsäure oder anderer Di- oder Oligocarbonsäuren, insbesondere ungesättigte Pflanzenöle wie Sonnenblumenöl.

In DE 10 2008 024 214 A1 werden Druckelemente mit einer photopolymerisierbaren, reliefbildenden Schicht, umfassend 40 bis 90 Gew.-% eines thermoplastisch-elastomeren Vinylaromat-Dien-Blockcopolymers, 1 bis 20 Gew.-% ethylenisch ungesättigte Monomere, 0,1 bis 5 Gew.-% eines Fotoinitiators und 1 bis 40 Gew.-% eines Cyclohexanpolycarbonsäureesters als Weichmacher beschrieben. Bei dem Weichmacher handelt es sich bevorzugt um Cyclohexan-1,2-dicarbonsäureester, insbesondere einen Cyclohexan-1,2-dicarbonsäurediisononylester (DINCH). Die Druckelemente können neben den Cyclohexanpolycarbonsäureestern optional noch weitere Weichmacher u.a. paraffinische, naphthenische oder aromatische Mineralöle enthalten, bevorzugt die Verwendung von DINCH oder dessen Mischung mit Polybutadienölen.

Die bislang bekannten thermoplastischen Elastomere oder Elastomer-Zusammensetzungen lassen zu wünschen übrig, da sie entweder nicht bedruckbar und/oder mit anderen Styrolpolymeren unverträglich sind, oder bei niedriger Shore-Härte eine geringe Wärmeformbeständigkeit und/oder Geruchs- und Alterungsbeständigkeitsprobleme aufweisen.

Der vorliegenden Erfindung lag daher als eine Aufgabe zugrunde, den zuvor genannten Nachteilen abzuhelfen.

Demgemäß wurden verbesserte thermoplastische Elastomer-Zusammensetzungen gefunden, bestehend aus:
a) 5 bis 99 Gew.-% eines Blockcopolymeren, das aus Hartblöcken A aus vinylaromatischen Monomeren und ein oder mehreren statistischen Weichblöcken B von unhydrierten oder hydrierten Blockcopolymerisaten aus Dienen und vinylaromatischen Monomeren aufgebaut ist,
b) 1 bis 95 Gew.-% eines Plastifizierungsmittels mit einer höheren Polarität als Weißöl und einer geringeren Polarität als Dinonyladipat,
c) 0 bis 50 Gew.-% eines Polyolefines und
d) 0 bis 60 Gew.-% Zusatzstoffe,
wobei die Summe aus den Komponenten a) bis d) 100 Gew.-% beträgt, und als Plastifizierungsmittel b) Mischungen aus Cyclohexan-1,2-dicarbonsäurediisononylester mit Weißöl in einem Mischungsverhältnis von 30:70 bis 70:30 eingesetzt werden.

Die Erfindung betrifft auch Elastomer-Zusammensetzungen bestehend aus:
a) 10 bis 97 Gew.-% eines Blockcopolymeren, das aus Hartblöcken A aus vinylaromatischen Monomeren und ein oder mehreren statistischen Weichblöcken B von unhydrierten oder hydrierten Blockcopolymerisaten aus Dienen und vinylaromatischen Monomeren aufgebaut ist,
b) 3 bis 90 Gew.-% eines Plastifizierungsmittels mit einer höheren Polarität als Weißöl und einer geringeren Polarität als Dinonyladipat,
c) 0 bis 50 Gew.-% eines Polyolefines und
d) 0 bis 40 Gew.-% Zusatzstoffe,
wobei die Summe aus den Komponenten a) bis d) 100 Gew.-% beträgt, und als Plastifizierungsmittel b) Mischungen aus Cyclohexan-1,2-dicarbonsäurediisononylester mit Weißöl in einem Mischungsverhältnis von 30:70 bis 70:30 eingesetzt werden.

Die Erfindung betrifft auch Elastomer-Zusammensetzungen, bestehend aus:
a) 49 bis 94 Gew.-% eines Blockcopolymeren, das aus Hartblöcken A aus vinylaromatischen Monomeren und ein oder mehreren statistischen Weichblöcken B von unhydrierten oder hydrierten Blockcopolymerisaten aus Dienen und vinylaromatischen Monomeren aufgebaut ist,
b) 4 bis 49 Gew.-% eines Plastifizierungsmittels mit einer höheren Polarität als Weißöl und einer geringeren Polarität als Dinonyladipat,
c) 1 bis 50 Gew.-% eines Polyolefines und
d) 0 bis 40 Gew.-% Zusatzstoffe, und als Plastifizierungsmittel b) Mischungen aus Cyc-Iohexan-1,2-dicarbonsäurediisononylester mit Weißöl in einem Mischungsverhältnis von 30:70 bis 70:30 eingesetzt werden.

Gegenstand ist auch eine thermoplastische Elastomer-Zusammensetzung, bestehend aus:
a) 49 bis 94 Gew.-% eines Blockcopolymeren, das aus Hartblöcken A aus vinylaromatischen Monomeren und ein oder mehreren statistischen Weichblöcken B von unhydrierten oder hydrierten Blockcopolymerisaten aus Dienen und vinylaromatischen Monomeren aufgebaut ist,
b) 4 bis 49 Gew.-% eines Plastifizierungsmittels mit einer höheren Polarität als Weißöl und einer geringeren Polarität als Dinonyladipat,
c) 1 bis 50 Gew.-% eines Polyolefines und
d) 1 bis 40 Gew.-% Zusatzstoffe, und als Plastifizierungsmittel b) Mischungen aus Cyclohexan-1,2-dicarbonsäurediisononylester mit Weißöl in einem Mischungsverhältnis von 30:70 bis 70:30 eingesetzt werden.

Die Erfindung betrifft auch ein Verfahren zur Herstellung einer thermoplastischen Elastomer-Zusammensetzung, dadurch gekennzeichnet, dass man Blockcopolymere mit einer Schmelzefließfähigkeit von 2 bis 50 g/10 min kontinuierlich in einen Extruder gibt und dann ein Plastifizierungsmittel mit einer höheren Polarität als Weißöl und einer geringeren Polarität als Dinonyladipat und gegebenenfalls weitere Komponenten zudosiert.

Die Erfindung betrifft auch ein Verfahren zur Herstellung einer thermoplastischen Elastomer-Zusammensetzung, wobei das Verhältnis von Länge des Extruders zum Schneckendurchmesser der Extruderschnecken 10:1 und 80:1 beträgt. Die Erfindung betrifft auch ein Verfahren zur Herstellung von elastischen und flexiblen Formteilen, wobei man eine thermoplastische Elastomer-Zusammensetzung wie oben beschrieben verwendet.

Die Erfindung betrifft auch die Verwendung der thermoplastischen Elastomer-Zusammensetzung zur Herstellung von elastischen und flexiblen Formteilen.

Die Erfindung betrifft auch ein Verfahren zur Herstellung von Formteilen mit steifen und flexiblen Bereichen, bei dem man eine thermoplastische Elastomer-Zusammensetzung (wie beschrieben) als flexible Komponente und ein schlagzähmodifiziertes oder nicht modifiziertes Styrolhomo- oder -copolymer, einen Polyester oder Polycarbonat als steife Komponente im Zweikomponenten-Spritzguß einsetzt.

Gegenstand ist auch die Verwendung der thermoplastischen Elastomer-Zusammensetzung zur Herstellung von Formteilen mit steifen und flexiblen Bereichen. Gegenstand der Erfindung sind auch Formteile mit steifen und flexiblen Bereichen, erhältlich nach einem Verfahren gemäß Beschreibung. Die Erfindung betrifft auch elastische und flexible Formteile, erhältlich nach dem Verfahren wie oben beschrieben.

Die Erfindung betrifft auch Spielzeuge, Spielzeugteile, beispielsweise Puppen und Puppenköpfe, Actionfiguren, Beißringe, Modellbaukomponenten, in Freizeit und Wassersport, an Sport- und Fitnessgeräten, Massagestäbe und -aufsätze, "Soft-Touch"-Anwendungen, wie Griffe oder Antirutschausrüstungen, Antirutschmatten und -füße für Maschinen und Haushaltsgeräte, als Bad- und Duschwanneneinsatz, im Innen- und Kofferraum von Fahrzeugen, Dichtungen, Schalter, Gehäuse mit Dichtlippen, Bedienknöpfe, Flexodruckplatten, Schuhsohlen, Schläuche, Profile, medizinische Artikel wie Infusionsbestecke, Dialyseeinheiten und Atemmasken, Hygieneartikel wie Zahnbürsten, Kabel-, Isolier- und Mantelmassen, Schallschutzelemente, Faltenbälge, Walzen oder Walzenummantelungen, Anti-Fussel-Walzen, Teppichrücken, Fußbodenbeläge, insbesondere solche mit Linoleumanmutung, Dehn- und Clingfolien, Stretchhauben, Regenschutzkleidung erhältlich nach dem Verfahren wie beschrieben.

### Zur Komponente a)

Die thermoplastischen Elastomer-Zusammensetzungen enthalten 5 bis 99 Gew.-%, bevorzugt 10 bis 97 Gew.-%, besonders bevorzugt 49 bis 94 Gew.-% eines Blockcopolymeren, das aus Hartblöcken A aus vinylaromatischen Monomeren und ein oder mehreren, in der Regel 1 bis 20, bevorzugt 1 bis 10, besonders bevorzugt 1 bis 5, also 1, 2, 3, 4 oder 5, insbesondere 1 bis 3, also 1, 2 oder 3 statistischen Weichblöcken B von unhydrierten oder hydrierten Blockcopolymerisaten aus Dienen und vinylaromatischen Monomeren aufgebaut ist.

Der Gewichtsanteil (Gewichtsprozent = Gew.-%) der Hartblöcke A beträgt in der Regel 5 bis 95, bevorzugt 10 bis 50, besonders bevorzugt 20 bis 40, und insbesondere 28 bis 34% bezogen auf das gesamte Blockcopolymere. Der Gewichtsanteil der Weichblöcke B beträgt in der Regel 5 bis 95, bevorzugt 50 bis 90, besonders bevorzugt 60 bis 80, und insbesondere 66 bis 72% bezogen auf das gesamte Blockcopolymere , d.h. die Summe aus Hartblöcken A + Weichblöcken B.

Als vinylaromatische Monomere eignen sich Styrol, α-Methylstyrol, Vinyltoluol, tert-Butylstyrol, Vinylnaphthalin oder deren Mischungen, gegebenenfalls in Kombination mit 1,1-Diphenylethylen, bevorzugt Styrol sowohl für die Hartblöcke A als auch für die statistischen Weichblöcke B. Die vinyl-aromatischen Monomere können für die Hartblöcke A und für die Weichblöcke B unterschiedlich sein, bevorzugt sind die vinyl-aromatische Monomere für die Hartblöcke A und für die Weichblöcke B gleich. Ebenfalls bevorzugt ist die Kombination von Styrol in den Weichblöcken B und α-Methylstyrol, Vinyltoluol, tert-Butylstyrol, Vinylnaphthalin oder deren Mischungen ggf. in Kombination mit 1,1-Diphenylethylen in den Hartblöcken A. Das Molverhältnis von 1,1-Diphenylethylen zur Summe aller Monomeren in den Hartblöcken A beträgt in der Regel 0,01:1 bis 1:1, bevorzugt 0,1:1 bis 1:1, besonders bevorzugt 0,3:1 bis 1:1, insbesondere 0,35:1 bis 0,9:1.

Der Vinylaromat-Gehalt der Weichblöcke B beträgt in der Regel 10 bis 60 Gew.-%, bevorzugt 20 bis 50 Gew.-%, besonders bevorzugt 30 bis 45 Gew.% bezogen auf das Dien. Der Weichblock B kann in mehrere statistische Unterblöcke mit unterschiedlichen Molekulargewichten und/oder unterschiedlichen Monomerzusammensetzungen unterteilt sein.

Als konjugierte Diene eignen sich Butadien, Isopren, Piperylen, 1-Phenylbutadien, oder deren Mischungen, bevorzugt Butadien und Isopren sowie deren Mischung, besonders bevorzugt Butadien.

Das Molekulargewicht eines Blockes A beträgt in der Regel 1.000 bis 200.000, bevorzugt 5.000 bis 50.000, besonders bevorzugt 15.000 bis 25.000 [g/mol]. Das Blockcopolymere kann aus Blöcken A mit gleichen oder unterschiedlichen Molekulargewichten aufgebaut sein.

Das Molekulargewicht des Weichblockes B beträgt üblicherweise von 2.000 bis 250.000, bevorzugt von 20.000 bis 150.000, besonders bevorzugt 60.000 bis 120.000 [g/mol]. Das Blockcopolymisat kann aus Blöcken B mit gleichen oder unterschiedlichen Molekulargewichten aufgebaut sein.

Die Blockcopolymeren können ohne, bevorzugt jedoch mit Stabilisatoren versetzt eingesetzt werden. Das Mengenverhältnis von Stabilisator zum Blockcopolymeren beträgt in der Regel 0 bis 10 Gew.-%, bevorzugt 0,001 bis 5 Gew.-%, besonders bevorzugt 0,01 bis 3 Gew.-%, insbesondere 0,05 bis 1 Gew.-% an Stabilisator. Als Stabilisatoren eigenen sich beispielsweise sterisch gehinderte Phenole wie Irganox® 1010 oder Irganox® 1076 (der BASF SE), bevorzugt in Kombination mit Sumilizer® GM oder Sumiiizer® GS (der Firma Sumitomo Chemical Co., Tokio) oder mit α-Tocopherol (Vitamin E) oder mit Phosphiten wie Irgaphos® 168 (der BASF SE) oder Trisnonylphenylphosphit.

Als thermoplastische Elastomere eignen sich Zweiblockcopolymere, unsymmetrische oder symmetrische Dreiblockcopolymere, Vierblockcopolymere, Fünfblockcopolymere, Multiblockcopolymere oder Sternblockcopolymere, bevorzugt symmetrische Dreiblockcopolymere oder Sternblockcopolymere mit außen liegenden Blöcken A und ein oder mehreren, in der Regel 1 bis 10, bevorzugt 1 bis 5, also 1, 2, 3, 4 oder 5, besonders bevorzugt 1 bis 3, also 1, 2 oder 3, insbesondere 1 oder 2, ganz besonders bevorzugt 1 dazwischen liegenden Blöcken B, sowie Mischungen der unterschiedlichen zuvor genannten Blockcopolymeren.

Die Glastemperatur des Hartblockes A liegt in der Regel bei 25 bis 220°C, bevorzugt bei mindestens 40°C, also 40 bis 200°C, besonders bevorzugt mindestens 50°C, also 50 bis 180°C. Durch den statistischen Aufbau der Weichblöcke B beträgt die Glasübergangstemperatur in der Regel (-80) bis +25°C, bevorzugt (-70) bis +5°C, besonders bevorzugt (-60) bis (-15)°C, insbesondere (-55) bis (-25)°C.

Die Blockcopolymeren weisen in der Regel einen Diengehalt von nicht mehr als 60 Gew.-% und nicht weniger als 20 Gew.-%, oftmals 20 bis 50 Gew.-%, bevorzugt 30 bis 50 Gew.-%, besonders bevorzugt 33 bis 45 Gew.-% auf, bezogen auf das gesamte Blockcopolymere (also die Summe aller eingesetzten Monomere).

### Zur Komponente b)

Die thermoplastische Elastomer-Zusammensetzung enthält 1 bis 95 Gew.-%, bevorzugt 3 bis 90 Gew.-%, besonders bevorzugt 4 bis 49 Gew.-%, insbesondere 10 bis 30 Gew.-% eines Plastifizierungsmittels mit einer höheren Polarität als Weißöl und einer geringeren Polarität als Dinonyladipat.

Als Plastifizierungsmittel, (nachfolgend auch Weichmacher genannt), eignen sich Mischungen von paraffinischen oder naphthenischem Weißöl mit Cyclohexan-1,2-dicarbonsäurediisononylester. Das Verhältnis von Weißöl zu Cyclohexan-1,2-dicarbonsäurediisononylester beträgt 30:70 bis 70:30.

Zur Plastifizierung von vinylaromathaltigen Weichphasen geeignet sind Mischungen von paraffinischen oder naphthenischem Weißöl mit Cyclohexan-1,2-dicarbonsäurediisononylester. Das Verhältnis von Weißöl zu Cyclohexan-1,2-dicarbonsäurediisononylester beträgt 30:70 bis 70:30. Als paraffinische oder naphthenische Öle eignen sich insbesondere auf medizinische Qualität aufgereinigte Weißöle, die eine medizinische und/oder lebensmittelrechtliche Zulassung haben. Bevorzugt sind Weißöle mit einer Viskosität von 50 bis 100 Centistokes (bei Raumtemperatur).

Ein wegen der Ökonomie besonders bevorzugtes System stellen Mischungen aus Cyclohexan-1,2-dicarbonsäurediisononylester (Handelsnamen DINCH) mit Weißöl dar, wobei das Mischungsverhältnis von Weißöl zu DINCH bei 20% Ölgehalt der Öl-Polymermischung bevorzugt 70 : 30 beträgt, bei 30% Ölgehalt bevorzugt 50 : 50, bei 40% Ölgehalt bevorzugt 42 : 58 und bei 50% Ölgehalt bevorzugt 36 : 64.

In den erfindungsgemäßen Zusammensetzungen wird Diisononyl-cyclohexan-1,2-dicarbonsäureester als Weichmacher verwendet, beispielsweise das auf dem Markt erhältliche Produkt Hexamoll® DINCH (CAS Nr. Europa und Asien: 166412-78-8; CAS-Nr. USA: 474919-59-0; der BASF SE).

Die genannten Cyclohexan-1,2-dicarbonsäure- diisononylester können wirtschaftlich vorteilhaft durch Kernhydrierung des aromatischen Rings der entsprechenden Phthalsäureester hergestellt werden. Hierzu stehen dem Fachmann eine Reihe von Verfahren und Katalysatoren zur Verfügung, beispielsweise das Kernhydrierungsverfahren gemäß WO 99/032427, umfassend die Kernhydrierung von Phthalaten bei 50 bis 250°C und einem Druck von 20 bis 300 bar mittels Katalysatoren, die wenigstens ein Metall der VIII. Nebengruppe des Periodensystems der Elemente, beispielsweise Platin, Rhodium, Palladium, Kobalt, Nickel oder Ruthenium, bevorzugt Ruthenium, entweder alleine oder zusammen mit wenigstens einem Metall aus der I. oder VII. Nebengruppe des Periodensystems, wie Kupfer oder Rhenium abgeschieden auf einem mesoporösen Aluminiumoxid-Trägermaterial mit bimodaler Porenverteilung enthalten, oder die Kernhydrierungsverfahren gemäß WO 2002/100536 - Verwendung eines Rutheniumkatalysators auf amorphem Siliziumdioxid als Träger, EP-A 1266882 - Verwendung eines Nickel/Magnesiumoxid auf Kieselgur-Katalysators, WO 2003/029181 - Verwendung eines Nickel/Zink auf Siliziumdioxid-Katalysators, WO 2003/029168 - Verwendung eines Palladium/ZnO auf Tonerde-Katalysators und eines Ruthenium/ZnO auf α-Al₂O₃-Katalysators oder WO 2004/09526 - Verwendung eines Ruthenium auf Titandioxid-Katalysators.

Die bei diesen Hydrierverfahren entstehenden cis/trans-Isomerengemische der betreffenden Cyclohexan-1,2-dicarbonsäureester, mit je nach Hydrierbedingungen unterschiedlich hohen cis- bzw. trans-Isomeren-Anteilen, können in den erfindungsgemäßen Zusammensetzungen als Weichmacher verwendet werden, wobei das thermodynamisch stabilere trans-Isomer in der Regel bei höheren Hydriertemperaturen über 120°C in relativ erhöhtem Ausmaß gebildet wird, wohingegen bei Temperaturen unterhalb 120°C im Allgemeinen das kinetisch bevorzugte cis-Isomer in relativ erhöhtem Ausmaß gebildet wird.

Die zur Herstellung der erfindungsgemäß verwendbaren Cyclohexan-1,2-dicarbonsäurediisononylester über den Weg der Kernhydrierung dienenden Phthalsäureester können auf für den Fachmann geläufige Weise nach den Verfahren, wie sie in Ullmann's Encyclopedia of Industrial Chemistry, 6. Auflage, Band 26, S. 512 - 516, Wiley-VCH, Weinheim 2003, erläutert werden, durch Umsetzung von Phthalsäureanhydrid mit den betreffenden Weichmacheralkoholen in Gegenwart eines Katalysators produziert werden. Dazu können sowohl Brønsted-Säuren, vorzugsweise Schwefelsäure, oder amphotere Katalysatoren, wie Tetraisopropylorthotitanat und/oder Tetra-n-butylorthotitanat, verwendet werden. Die Veresterung wird im Allgemeinen im Temperaturbereich von 120 bis 250°C durchgeführt, wobei der Alkohol im stöchiometrischen Überschuss bezüglich des Phthalsäureanhydrids eingesetzt wird und zusätzlich als Schleppmittel bei der Ausschleusung des bei der Veresterung gebildeten Wassers durch Azeotropdestillation dient. Bei Verwendung amphoterer Veresterungskatalysatoren können diese zusammen mit dem Alkohol der Veresterungsreaktion zugeführt werden, vorteilhaft werden diese amphoteren Katalysatoren dem Reaktionsgemisch erst ab einer Temperatur von etwa 160°C zugesetzt, also nachdem sich durch die unkatalysierte Addition des Alkohols an das Phthalsäureanhydrid der betreffende Phthalsäurehalbester gebildet hat, und anschließend die Veresterung unter Temperaturerhöhung bis auf Temperaturen von im Allgemeinen von 200 bis 250°C unter azeotroper Ausschleusung des Reaktionswassers und Rückführung des vom Wasser abgetrennten Alkohols in die Veresterungsreaktion, bis zur praktisch vollständigen Umsetzung des Phthalsäureanhydrids zum Diester zu Ende geführt.

Auf diese Weise können Katalysatorverluste durch Hydrolyse der Titan-Alkoholate während der Veresterung minimiert werden. Nach Abtrennung des überschüssigen Alkohols, im Allgemeinen mittels Destillation, wird der rohe Phthalsäurediester mittels wässriger Basen, bevorzugt Alkalimetall- und/oder Erdalkalimetall-Hydroxide, neutralisiert bzw. die amphoteren Katalysatoren hydrolysiert, von den dabei ausfallenden Feststoffen abfiltriert und einer Trocknung und Feinreinigung, beispielsweise durch Strippung mit überhitztem Wasserdampf, unterzogen. Vorteilhafte Ausgestaltungen wie sie zur Produktion der zur Herstellung der erfindungsgemäß zu verwendenden Cyclohexan-1,2-dicarbonsäure-diisononylester dienenden Phthalsäuredialkylester angewandt werden können, werden z.B. in WO 1994/17028, WO 1998/052901, EP-A 1186 593, EP-A 1300 388, DE-A 1945359 und DE-A 2330435 beschrieben.

Alternativ zur Methode der Kernhydrierung der entsprechenden Phthalsäuredialkylester können die erfindungsgemäß zu verwendenden Cyclohexan-1,2-dicarbonsäure-C₈-C₁₀-dialkylester über die Diels-Alder-Route, beispielsweise gemäß WO 2002/066412, synthetisiert werden, indem 1,3-Butadien mit Maleinsäureanyhdrid bei 40 bis 250°C in einer Diels-Alder-Reaktion, vorteilhaft in Gegenwart eines Radikal-Polymerisationsinhibitors, z.B. Phenothiazin, zum Cyclohex-4-en-1,2-dicarbonsäureanhydrid cyclisiert, anschließend die Doppelbindung des Cyclohexenringes katalytisch - z.B. mittels Katalysatoren, die Metalle der VIII. Nebengruppe des Periodensystems der Elemente, beispielsweise Nickel, Kobalt, Platin, Palladium, Rhodium und/oder Ruthenium abgeschieden auf einem Trägermaterial, wie Aktivkohle, Al₂O₃ oder SiO₂ enthalten - hydriert und das so erhaltene Cyclohexan-1,2-dicarbonsäureanhydrid mit dem gewünschten Weichmacheralkohol verestert, wobei als Veresterungskatalysatoren Brønsted-Säuren, bevorzugt Schwefelsäure, oder amphotere Katalysatoren, wie Titan(IV)alkoholate, beispielsweise Tetra-n-butyl-orthotitanat, eingesetzt werden können.

Als Alkoholkomponente zur Herstellung der erfindungsgemäß anzuwendenden Cyclohexan-1,2-dicarbonsäure -diisononylester sowohl über den Weg Veresterung von Phthalsäureanhydrid zu den entsprechenden Phthalsäurediestern und deren Hydrierung als auch über den Weg der Veresterung von Cyclohexan-1,2-dicarbonsäureanhydrid wird Isononanol eingesetzt.

2-Ethylhexanol, das für lange Jahre der in den größten Mengen produzierte Weichmacheralkohol war, kann über die Aldolkondensation von n-Butyraldehyd zu 2-Ethylhexenal und dessen anschließende Hydrierung zu 2-Ethylhexanol gewonnen werden (s. Ullmann's Encyclopedia of Industrial Chemistry; 5. Auflage, Band A 10, S. 137 - 140, VCH Verlagsgesellschaft mbH, Weinheim 1987).

Bei dem Alkohol Isooctanol handelt es sich im Unterschied zu 2-Ethylhexanol, bedingt durch seine Herstellungsweise, nicht um eine einheitliche chemische Verbindung sondern um ein Isomerengemisch aus unterschiedlich verzweigten C₈-Alkoholen, beispielsweise aus 2,3-Dimethyl-1-hexanol, 3,5-Dimethyl-1-hexanol, 4,5-Dimethyl-1-hexanol, 3-Methyl-1-heptanol und 5-Methyl-1-heptanol, die je nach den angewandten Herstellungsbedingungen und -verfahren in unterschiedlichen Mengenverhältnissen im Isooctanol vorliegen können.

Isooctanol wird üblicherweise durch die Codimerisierung von Propen mit Butenen, vorzugsweise n-Butenen, und anschließende Hydroformylierung des dabei erhaltenen Gemisches aus Heptenisomeren hergestellt. Das bei der Hydroformylierung erhaltene Octanal-Isomerengemisch kann anschließend auf an sich herkömmliche Weise zum Isooctanol hydriert werden.

Die Codimerisierung von Propen mit Butenen zu isomeren Heptenen kann vorteilhaft mit Hilfe des homogenkatalysierten Dimersol®-Verfahrens (Chauvin et al; Chem. Ind.; Mai 1974, S. 375 - 378) erfolgen, bei dem als Katalysator ein löslicher Nickel-Phosphin-Komplex in Gegenwart einer Ethylaluminiumchlor-Verbindung, beispielsweise Ethylaluminiumdichlorid, dient. Als Phosphin-Liganden für den Nickelkomplex-Katalysator können z.B. Tributylphosphin, Tri-isopropylphosphin, Tricyclohexylphosphin und/oder Tribenzylphosphin eingesetzt werden. Die Umsetzung findet bei Temperaturen von 0 bis 80°C statt, wobei vorteilhaft ein Druck eingestellt wird, bei dem die Olefine im flüssigen Reaktionsgemisch gelöst vorliegen (Cornils; Hermann: Applied Homogeneous Catalysis with Organometallic Compounds; 2. Auflage; Bd. 1; S. 254 - 259, Wiley-VCH, Weinheim 2002). Alternativ zum mit homogen im Reaktionsmedium gelösten Nickelkatalysatoren betriebenen Dimersol®-Verfahren kann die Codimerisierung von Propen mit Butenen auch mit auf einem Träger abgeschiedenen, heterogenen NiO-Katalysatoren durchgeführt werden, wobei ähnliche Hepten-Isomerenverteilungen erhalten werden wie beim homogen katalysierten Verfahren. Solche Katalysatoren werden beispielsweise im sogenannten Octol®-Verfahren (Hydrocarbon Processing, Februar 1986, S. 31 - 33) verwendet, ein gut geeigneter spezifischer Nickel-Heterogenkatalysator zur Olefindimerisierung bzw. Codimerisierung ist z.B. in WO 1995/14647 offenbart.

Anstelle von Katalysatoren auf Basis von Nickel können auch Brønsted-acide heterogene Katalysatoren zur Codimerisierung von Propen mit Butenen verwendet werden, wobei in der Regel höher verzweigte Heptene als in den Nickel-katalysierten Verfahren erhalten werden. Beispiele von hierfür geeigneten Katalysatoren sind feste Phosphorsäure-Katalysatoren z.B. mit Phosphorsäure imprägnierte Kieselgur oder Diatomeenerde, wie sie vom PolyGas®-Verfahren zur Olefindi- bzw. Oligomerisierung benutzt werden (Chitnis et al; Hydrocarbon Engineering 10, Nr. 6 - Juni 2005). Zur Codimerisierung von Propen und Butenen zu Heptenen sehr gut geeignete Brønsted-acide Katalysatoren sind Zeolithe, deren sich das auf Basis des PolyGas®-Verfahrens weiterentwickelte EMOGAS®-Verfahren bedient.

Die so erhaltenen Heptenisomerengemische werden nach bekannten Verfahren mittels Kobalt- oder Rhodium-Katalyse, vorzugsweise mittels Kobalt-Katalyse, hydroformyliert. Zur Kobaltkatalysierten Hydroformylierung der Heptenisomerengemische eignen sich beispielsweise die in Falbe, New Syntheses with Carbon Monoxide, Springer, Berlin, 1980 auf den Seiten 162 - 168, erläuterten industriell etablierten Verfahren, wie das Ruhrchemie-Verfahren, das BASF-Verfahren, das Kuhlmann-Verfahren oder das Shell-Verfahren. Während das Ruhrchemie-, BASF- und das Kuhlmann-Verfahren mit nicht ligandmodifizierten Kobaltcarbonyl-Verbindungen als Katalysatoren arbeiten und dabei Octanal-Gemische erhalten, verwendet das Shell-Verfahren (DE-A 1593368) Phosphin- oder Phosphit-Ligand-modifizierte Kobaltcarbonyl-Verbindungen als Katalysator, die aufgrund ihrer zusätzlichen hohen Hydrieraktivität direkt zu den Octanolgemischen führen. Vorteilhafte Ausgestaltungen zur Durchführung der Hydroformylierung mit nicht-ligandmodifizierten Kobaltcarbonylkomplexen werden in DE-A 2139630, DE-A 2244373, DE-A 2404855 und WO 2001/014297 detailliert beschrieben.

Zur Rhodium-katalysierten Hydroformylierung der Heptenisomerengemische kann das industriell etablierte Rhodium-Niederdruck-Hydroformylierungsverfahren mit Triphenylphosphinligand-modifizierten Rhodiumcarbonylverbindungen angewandt werden, wie es Gegenstand von US-A 4148830 ist. Vorteilhaft können zur Rhodium-katalysierten Hydroformylierung langkettiger Olefine, wie der nach den vorstehend genannten Verfahren erhaltenen Heptenisomerengemische nicht-ligandmodifizierte Rhodiumcarbonylverbindngen als Katalysator dienen, wobei im Unterschied zum Niederdruckverfahren ein höherer Druck von 80 bis 400 bar einzustellen ist. Die Durchführung solcher Rhodium-Hochdruck-Hydroformylierungsverfahren wird in z.B. EP-A 695734, EP-A 880494 und EP-A 1047655 beschrieben.

Die nach Hydroformylierung der Hepten-Isomerengemische erhaltenen Isooctanalgemische werden auf an sich herkömmliche Weise zu Isooctanolgemischen katalytisch hydriert. Bevorzugt werden hierzu heterogene Katalysatoren verwendet, die als katalytisch aktive Komponente Metalle und/oder Metalloxide der VI. bis VIII. sowie der I. Nebengruppe des Periodensystems der Elemente, insbesondere Chrom, Molybdän, Mangan, Rhenium, Eisen, Kobalt, Nickel und/oder Kupfer, gegebenenfalls abgeschieden auf einem Trägermaterial wie Al₂O₃, SiO₂ und/oder TiO₂, enthalten. Solche Katalysatoren werden z.B. in DE-A 3228881, DE-A 2628987 und DE-A 2445303 beschrieben. Besonders vorteilhaft wird die Hydrierung der Isooctanale mit einem Überschuss an Wasserstoff von 1,5 bis 20% über der stöchiometrisch zur Hydrierung der Isooctanale benötigten Wasserstoffmenge, bei Temperaturen von 50 bis 200°C und bei einem Wasserstoffdruck von 25 bis 350 bar durchgeführt und zur Vermeidung von Nebenreaktionen dem Hydrierzulauf gemäß DE-A 2628987 eine geringe Menge Wasser, vorteilhaft in Form einer wässrigen Lösung eines Alkalimetallhydroxids oder -carbonats entsprechend der Lehre von WO 2001/087809 zugefügt.

Nach destillativer Reinigung des Austrags der Hydrierung kann das so erhaltene Isooctanol-Gemisch, wie vorstehend beschrieben, mit Phthalsäure oder Phthalsäureanhydrid zum Phthalsäurediisooctylester, dem Ausgangsmaterial zur Herstellung des Cyclohexan-1,2-dicarbonsäure-diisooctylesters über den Weg der Kernhydrierung des aromatischen Rings, verestert werden. Cyclohexan-1,2-dicarbonsäure-diisononylester werden auf ähnliche Weise hergestellt wie vorstehend für die Cyclohexan-1,2-dicarbonsäure-di-C₈-bis-C₁₀-alkylester im Allgemeinen beschrieben und zwar durch die Veresterung von Cyclohexan-1,2-dicarbonsäureanhydrid, das vorteilhaft über die Diels-Alder-Synthese aus 1,3-Butadien und Maleinsäureanhydrid und anschließende Hydrierung der Doppelbindung des so erhaltenen Cyclohexendicarbonsäureanhydrids gewonnen werden kann, mit Isononanol, oder bevorzugt durch die Kernhydrierung von Phthalsäurediisononylestern, die als Standardweichmacher für PVC in großen Mengen dem Markt zur Verfügung stehen, wobei die vorstehend genannten Kernhydrierungsverfahren- und Katalysatoren verwendet werden können.

Bei der zur Synthese dieser Isononylester benötigten Alkoholkomponente Isononanol handelt es sich nicht um eine einheitliche chemische Verbindung sondern um ein Gemisch aus unterschiedlich verzweigten, isomeren C₉-Alkoholen, die je nach der Art ihrer Herstellung, insbesondere auch der verwendeten Ausgangsstoffe, unterschiedliche Verzweigungsgrade haben können. Im Allgemeinen werden die Isononanole durch Dimerisierung von Butenen zu Isooctengemischen, anschließende Hydroformylierung der Isooctengemische und Hydrierung der dabei erhaltenen Isononalgemische zu Isononanolgemischen hergestellt, wie in Ullmann's Encyclopedia of Industrial Chemistry, 5. Auflage, Bd. A1, S. 291 - 292, VCH Verlagsgesellschaft, Weinheim 1995, erläutert.

Als Ausgangsmaterial zur Herstellung der Isononanole können Isobuten, cis- und trans-2-Buten als auch 1-Buten oder Gemische dieser Butenisomere verwendet werden. Bei der vorwiegend mittels flüssiger, z.B. Schwefel- oder Phosphorsäure, oder fester, z.B. auf Kieselgur, SiO₂ oder Al₂O₃ als Trägermaterial aufgebrachter Phosphorsäure oder Zeolithe, Brensted-Säuren katalysierten Dimerisierung von reinem Isobuten, wird überwiegend das stark verzweigte 2,4,4-Trimethylpenten, auch als Diisobutylen bezeichnet, erhalten, das nach Hydroformylierung und Hydrierung des Aldehyds hochverzweigte Isononanole liefert.

Bevorzugt werden die erfindungsgemäß zu verwendenden Cyclohexan-1,2-dicarbonsäurediisononylester bzw. die als Ausgangsstoff zu deren Herstellung dienenden Phthalsäurediisononylester aus Isononanolen mit einem geringeren Verzweigungsgrad hergestellt, die dem Weichmacher Cyclohexan-1,2-dicarbonsäurediisononylester verbesserte Weichmachereigenschaften vermitteln. Solche gering verzweigten Isononanol-Gemische werden aus den linearen Butenen 1-Buten, cis- und/oder trans-2-Buten, die gegebenenfalls noch geringere Mengen an Isobuten enthalten können, über den vorstehend beschriebenen Weg der Butendimerisierung, Hydroformylierung des Isoctens und Hydrierung der erhaltenen Isononanal-Gemische hergestellt. Ein bevorzugter Rohstoff ist das sogenannte Raffinat II, das aus dem C₄-Schnitt eines Crackers, beispielsweise eines Steamcrackers, das nach Eliminierung von Allenen, Acetylenen und Dienen, insbesondere 1,3-Butadien durch dessen Partialhydrierung zu linearen Butenen oder dessen Abtrennung durch Extraktivdestillation, beispielsweise mittels N-Methylpyrrolidon, und nachfolgender Bronsted-Säure katalysierter Entfernung des darin enthaltenen Isobutens durch dessen Umsetzung mit Methanol oder Isobutanol nach großtechnisch etablierten Verfahren unter Bildung des Kraftstoffadditivs Methyl-tert.-Butylether (MTBE) oder des zur Gewinnung von Rein-Isobuten dienenden Isobutyl-tert.-Butylether, gewonnen wird.

Raffinat II enthält neben 1-Buten und cis- und trans-2-Buten noch n- und iso-Butan und Restmengen von bis zu 5 Gew.-% an Isobuten.

Die Dimerisierung der linearen Butene oder des im Raffinat II enthaltenen Butengemischs kann mittels der gängigen, großtechnisch praktizierten Verfahren, wie sie vorstehend in Zusammenhang mit der Erzeugung von Isoheptengemischen erläutert wurden, beispielsweise mittels heterogener, Brønsted-acider Katalysatoren wie sie im PolyGas®- oder EMOGAS®-Verfahren eingesetzt werden, mittels des Dimersol®-Verfahrens unter Verwendung homogen im Reaktionsmedium gelöster Nickel-Komplex-Katalysatoren oder mittels heterogener, Nickel(II)oxid-haltiger Katalysatoren nach dem Octol®-Verfahren oder dem Verfahren gemäß WO 1995/14647 durchgeführt werden. Die dabei erhaltenen Isoocten-Gemische werden anschließend mittels Rhodium- oder Kobalt-katalysierter Hydroformylierung, vorzugsweise Kobalt-katalysierter Hydroformylierung, nach den vorstehend in Zusammenhang mit der Herstellung von Isooctanal-Gemischen erläuterten Verfahren in Isononanal-Gemische überführt und diese z.B. mittels eines der vorstehend in Zusammenhang mit der Isooctanol-Herstellung genannten Katalysatoren zu den zur Herstellung der erfindungsgemäß bevorzugt zu verwendenden Cyclohexan-1,2-dicarbonsäure-diisononylester geeigneten Isononanolgemischen hydriert.

Die so hergestellten Isononanol-Isomerengemische können über ihren Isoindex charakterisiert werden, der aus dem Verzweigungsgrad der einzelnen, isomeren Isononanolkomponenten im Isononanolgemisch multipliziert mit deren prozentualen Anteil im Isononanolgemisch errechnet werden kann. So tragen z.B. n-Nonanol mit dem Wert 0, Methyloctanole (eine Verzweigung) mit dem Wert 1 und Dimethylheptanole (2 Verzweigungen) mit dem Wert 2 zum Isoindex eines Isononanolgemisches bei. Je höher die Linearität, desto niedriger ist der Isoindex des betreffenden Isononanolgemisches. Dementsprechend kann der Isoindex eines Isononanolgemisches durch gaschromatographische Auftrennung des Isononanolgemisches in seine einzelnen Isomere und damit einhergehender Quantifizierung von deren prozentualen Mengenanteil im Isononanolgemisch, bestimmt nach Standardmethoden der gaschromatographischen Analyse, ermittelt werden. Zwecks Erhöhung der Flüchtigkeit und Verbesserung der gaschromatographischen Auftrennung der isomeren Nonanole werden diese zweckmäßigerweise vor der gaschromatographischen Analyse mittels Standardmethoden, beispielsweise durch Umsetzung mit N-Methyl-N-trimethylsilyltrifluoracetamid, trimethylsilyliert.

Um eine möglichst gute Trennung der einzelnen Komponenten bei der gaschromatographischen Analyse zu erzielen, werden vorzugsweise Kapillarsäulen mit Polydimethylsiloxan als stationärer Phase verwendet. Solche Kapillarsäulen sind im Handel erhältlich und es bedarf lediglich einiger weniger Routineversuche des Fachmanns, um aus dem vielfältigen Angebot des Handels ein optimal für diese Trennaufgabe geeignetes Fabrikat auszuwählen.

Die erfindungsgemäß zu verwendenden Cyclohexan-1,2-dicarbonsäure-diisononylester sind im Allgemeinen mit Isononanolen mit einem Isoindex von 0,8 bis 2, vorzugsweise von 1,0 bis 1,8 und besonders bevorzugt von 1,1 bis 1,5 verestert, die nach den vorstehend genannten Verfahren hergestellt werden können.

Lediglich beispielhaft werden im Folgenden mögliche Zusammensetzungen von Isononanol-Gemischen angegeben. Diese können zur Herstellung von erfindungsgemäß zu verwendendem Cyclohexan-1,2-dicarbonsäurediisononylester dienen, wobei anzumerken ist, dass die Anteile der im Einzelnen aufgeführten Isomeren im Isononanolgemisch abhängig von der Zusammensetzung des Ausgangsmaterials, beispielsweise Raffinat II, dessen Zusammensetzung an Butenen produktionsbedingt variieren kann, und von Schwankungen in den angewandten Produktionsbedingungen, beispielsweise dem Alter der benutzten Katalysatoren und daran anzupassenden Temperatur- und Druckbedingungen, variieren können.

Beispielsweise kann ein Isononanolgemisch, das durch Kobalt-katalysierte Hydroformylierung und anschließende Hydrierung aus einem unter Verwendung von Raffinat II als Rohstoff mittels des Katalysators und Verfahrens gemäß WO 1995/14647 erzeugten Isooctengemisches hergestellt wurde, folgende Zusammensetzung haben:
- 1,73 bis 3,73 Gew.-%, bevorzugt 1,93 bis 3,53 Gew.-%, besonders bevorzugt 2,23 bis 3,23 Gew.-% 3-Ethyl-6-methyl-hexanol;
- 0,38 bis 1,38 Gew.-%, bevorzugt 0,48 bis 1,28 Gew.-%, besonders bevorzugt 0,58 bis 1,18 Gew.-% 2,6 Dimethylheptanol;
- 2,78 bis 4,78 Gew.-%, bevorzugt 2,98 bis 4,58 Gew.-%, besonders bevorzugt 3,28 bis 4,28 Gew.-% 3,5-Dimethylheptanol;
- 6,30 bis 16,30 Gew.-%, bevorzugt 7,30 bis 15,30 Gew.-%, besonders bevorzugt 8,30 bis 14,30 Gew.-% 3,6-Dimethylheptanol;
- 5,74 bis 11,74 Gew.-%, bevorzugt 6,24 bis 11,24 Gew.-%, besonders bevorzugt 6,74 bis 10,74 Gew.-% 4,6-Dimethylheptanol;
- 1,64 bis 3,64 Gew.-%, bevorzugt 1,84 bis 3,44 Gew.-%, besonders bevorzugt 2,14 bis 3,14 Gew.-% 3,4,5-Trimethylhexanol;
- 1,47 bis 5,47 Gew.-%, bevorzugt 1,97 bis 4,97 Gew.-%, besonders bevorzugt 2,47 bis 4,47 Gew.-% 3,4,5-Trimethylhexanol, 3-Methyl-4-ethylhexanol und 3-Ethyl-4-methylhexanol;
- 4,00 bis 10,00 Gew.-%, bevorzugt 4,50 bis 9,50 Gew.-%, besonders bevorzugt 5,00 bis 9,00 Gew.-% 3,4-Dimethylheptanol;
- 0,99 bis 2,99 Gew.-%, bevorzugt 1,19 bis 2,79 Gew.-%, besonders bevorzugt 1,49 bis 2,49 Gew.-% 4-Ethyl-5-methylhexanol und 3-Ethylheptanol;
- 2,45 bis 8,45 Gew.-%, bevorzugt 2,95 bis 7,95 Gew.-%, besonders bevorzugt 3,45 bis 7,45 Gew.-% 4,5-Dimethylheptanol und 3-Methyloctanol;
- 1,21 bis 5,21 Gew.-%, bevorzugt 1,71 bis 4,71 Gew.-%, besonders bevorzugt 2,21 bis 4,21 Gew.-% 4,5-Dimethylheptanol;
- 1,55 bis 5,55 Gew.-%, bevorzugt 2,05 bis 5,05 Gew.-%, besonders bevorzugt 2,55 bis 4,55 Gew.-% 5,6-Dimethylheptanol;
- 1,63 bis 3,63 Gew.-%, bevorzugt 1,83 bis 3,43 Gew.-%, besonders bevorzugt 2,13 bis 3,13 Gew.-% 4-Methyloctanol;
- 0,98 bis 2,98 Gew.-%, bevorzugt 1,18 bis 2,78 Gew.-%, besonders bevorzugt 1,48 bis 2,48 Gew.-% 5-Methyloctanol;
- 0,70 bis 2,70 Gew.-%, bevorzugt 0,90 bis 2,50 Gew.-%, besonders bevorzugt 1,20 bis 2,20 Gew.-% 3,6,6-Trimethylhexanol;
- 1,96 bis 3,96 Gew.-%, bevorzugt 2,16 bis 3,76 Gew.-%, besonders bevorzugt 2,46 bis 3,46 Gew.-% 7-Methyloctanol;
- 1,24 bis 3,24 Gew.-%, bevorzugt 1,44 bis 3,04 Gew.-%, besonders bevorzugt 1,74 bis 2,74 Gew.-% 6-Methyloctanol;
- 0,1 bis 3 Gew.-%, bevorzugt 0,2 bis 2 Gew.-%, besonders bevorzugt 0,3 bis 1 Gew.-% n-Nonanol;
- 25 bis 35 Gew.-%, bevorzugt 28 bis 33 Gew.-%, besonders bevorzugt 29 bis 32 Gew.-% sonstige Alkohole mit 9 und 10 Kohlenstoffatomen; mit der Maßgabe, dass die die Gesamtsumme der genannten Komponenten 100 Gew.-% ergibt.

Entsprechend den vorstehenden Ausführungen kann ein Isononanolgemisch, das durch Kobalt-katalysierte Hydroformylierung und anschließende Hydrierung unter Verwendung eines Ethylenhaltigen Butengemisches als Rohstoff mittels des PolyGas®- oder EMOGAS®-Verfahrens erzeugten Isooctengemisches hergestellt wurde, im Bereich der folgenden Zusammensetzungen, abhängig von der Rohstoffzusammensetzung und Schwankungen der angewandten Reaktionsbedingungen variieren:
- 6,0 bis 16,0 Gew.-%, bevorzugt 7,0 bis 15,0 Gew.-%, besonders bevorzugt 8,0 bis 14,0 Gew.-% n-Nonanol;
- 12,8 bis 28,8 Gew.-%, bevorzugt 14,8 bis 26,8 Gew.-%, besonders bevorzugt 15,8 bis 25,8 Gew.-% 6-Methyloctanol;
- 12,5 bis 28,8 Gew.-%, bevorzugt 14,5 bis 26,5 Gew.-%, besonders bevorzugt 15,5 bis 25,5 Gew.-% 4-Methyloctanol;
- 3,3 bis 7,3 Gew.-%, bevorzugt 3,8 bis 6,8 Gew.-%, besonders bevorzugt 4,3 bis 6,3 Gew.-% 2-Methyloctanol;
- 5,7 bis 11,7 Gew.-%, bevorzugt 6,3 bis 11,3 Gew.-%, besonders bevorzugt 6,7 bis 10,7 Gew.-% 3-Ethylheptanol;
- 1,9 bis 3,9 Gew.-%, bevorzugt 2,1 bis 3,7 Gew.-%, besonders bevorzugt 2,4 bis 3,4 Gew.-% 2-Ethylheptanol;
- 1,7 bis 3,7 Gew.-%, bevorzugt 1,9 bis 3,5 Gew.-%, besonders bevorzugt 2,2 bis 3,2 Gew.-% 2-Propylhexanol;
- 3,2 bis 9,2 Gew.-%, bevorzugt 3,7 bis 8,7 Gew.-%, besonders bevorzugt 4,2 bis 8,2 Gew.-% 3,5-Dimethylheptanol;
- 6,0 bis 16,0 Gew.-%, bevorzugt 7,0 bis 15,0 Gew.-%, besonders bevorzugt 8,0 bis 14,0 Gew.-% 2,5-Dimethylheptanol;
- 1,8 bis 3,8 Gew.-%, bevorzugt 2,0 bis 3,6 Gew.-%, besonders bevorzugt 2,3 bis 3,3 Gew.-% 2,3-Dimethylheptanol;
- 0,6 bis 2,6 Gew.-%, bevorzugt 0,8 bis 2,4 Gew.-%, besonders bevorzugt 1,1 bis 2,1 Gew.-% 3-Ethyl-4-methylhexanol;
- 2,0 bis 4,0 Gew.-%, bevorzugt 2,2 bis 3,8 Gew.-%, besonders bevorzugt 2,5 bis 3,5 Gew.-% 2-Ethyl-4-methylhexanol;
- 0,5 bis 6,5 Gew.-%, bevorzugt 1,5 bis 6 Gew.-%, besonders bevorzugt 1,5 bis 5,5 Gew.-% sonstige Alkohole mit 9 Kohlenstoffatomen;
mit der Maßgabe, dass sich die Gesamtsumme der genannten Komponenten zu 100% Gew.-% ergibt.

Anstelle der Produktion der Cyclohexan-1,2-dicarbonsäure-diisononylester über die zuvor geschilderten Syntheserouten ausgehend von den genannten olefinischen bzw. aromatischen Rohstoffen, die hohe Investitionskosten erfordert, können die erfindungsgemäß zu verwendenden Cyclohexan-1,2-dicarbonsäure-diisononylester vorteilhaft und mit relativ geringem Investitionsaufwand durch die Kernhydrierung der im Handel z.B. unter den Marken Palatinol® N (BASF SE; CAS Nr. 28553-12-0), Vestinol® 9 (Oxeno Olefinchemie GmbH; CAS Nr. 28553-12-0) oder Jayflex® DINP (Exxon Mobil Chemical; CAS Nr. 08515-48-0) kommerziell verfügbaren Phthalsäure-diisononylester hergestellt werden, beispielsweise mittels Katalysatoren und Verfahren wie sie vorstehend in Zusammenhang mit der Herstellung von Cyclohexan-1,2-dicarbonsäure-C₈-bis C₁₀-dialkylestern genannt wurden, vorteilhaft mittels Katalysatoren und Verfahren gemäß EP-B 1042273.

Die Herstellung des Cyclohexan-1,2-dicarbonsäurediisodecylesters kann analog der vorstehenden Erläuterungen z.B. durch die Kernhydrierung des aromatischen Rings von kommerziell als Standardweichmacher erhältlichem Diisodecylphthalat (z.B. Jayflex® DIDP der ExxonMobil Chemical; CAS Nr. 68515-49-1), beispielsweise nach dem Verfahren der EP-B 1042273, erfolgen oder durch die Veresterung von Cyclohexan-1,2-dicarbonsäureanhydrid mit Isodecanol z.B. gemäß dem Verfahren der WO 2003/029339. Als Veresterungskatalysatoren können dabei sowohl Brønsted-Säuren, wie Schwefelsäure, als auch amphotere Katalysatoren, wie Tetra-n-butylorthotitanat, verwendet werden.

Bei dem zur Veresterung des Cyclohexan-1,2-dicarbonsäureanhydrids bzw. zur Herstellung von Phthalsäurediisodecylester durch Veresterung von Pththalsäureanhydrid verwendeten Isodecanol handelt es sich nicht um eine einheitliche chemische Verbindung sondern um ein komplexes Gemisch unterschiedlich verzweigter, isomerer Decanole. Diese werden im Allgemeinen durch die Nickel- oder Brønsted-Säure-katalysierte Trimerisierung von Propylen, beispielsweise nach dem vorstehend erläuterten PolyGas®- oder dem EMOGAS®-Verfahren, nachfolgende Hydroformylierung des dabei erhaltenen Isononen-Isomerengemisches mittels homogener Rhodium- oder Kobaltcarbonyl-Katalysatoren, vorzugsweise mittels Kobaltcarbonyl-Katalysatoren und Hydrierung des entstandenen Isodecanal-Isomerengemisches z.B. mittels der vorstehend in Zusammenhang mit der Herstellung von Isooctanol bzw. Isononanol genannten Katalysatoren und Verfahren (Ullmann's Encyclopedia of Industrial Chemistry; 5. Auflage, Band A1, S. 293, VCH Verlagsgesellschaft, Weinheim 1985). Das so produzierte Isodecanol ist im Allgemeinen stark verzweigt.

Bei dem Cyclohexan-1,2-dicarbonsäure-di(2-propylheptyl)ester kann es sich um einen Ester der Cyclohexan-1,2-dicarbonsäure mit reinem 2-Propylheptanol handeln oder um Ester der Cyclo-hexan-1,2-dicarbonsäure mit Propylheptanol-Isomerengemischen, wie sie im Allgemeinen bei der industriellen Herstellung von 2-Propylheptanol gebildet werden und gemeinhin ebenfalls als 2-Propylheptanol bezeichnet werden.

Die Herstellung des Cyclohexan-1,2-dicarbonsäure-di(2-propylheptyl)esters kann analog der vorstehenden Erläuterungen z.B. durch die Kernhydrierung des aromatischen Rings von kommerziell als Weichmacher erhältlichem Phthalsäuredi(2-propylheptyl)ester, z.B. Palatinol® 10-P (BASF SE; CAS Nr. 53306-54-0), beispielsweise nach den vorstehend in Zusammenhang mit der Herstellung von Cyclohexan-1,2-dicarbonsäure-C₈-bis C₁₀-dialkylestern genannten Verfahren, insbesondere nach dem Verfahren der EP-B 1042273, erfolgen oder durch die Veresterung von Cyclohexan-1,2-dicarbonsäureanhydrid mit 2-Propylheptanol z.B. gemäß den Verfahren der WO 2002/066412 oder der WO 2003/029339. Als Veresterungskatalysatoren können dabei sowohl Brønsted-Säuren, wie Schwefelsäure, als auch amphotere Katalysatoren, wie Tetra-n-butylorthotitanat, verwendet werden.

Reines 2-Propyheptanol kann durch Aldolkondensation von n-Valeraldehyd und nachfolgende Hydrierung des dabei gebildeten 2-Propylheptenals, beispielsweise gemäß US 2,921,089, erhalten werden. Im Allgemeinen enthält kommerziell erhältliches 2-Propylheptanol neben der Hauptkomponente 2-Propylheptanol herstellungsbedingt eines oder mehrere der 2-Propylheptanol-Isomeren 2-Propyl-4-methyl-hexanol, 2-Propyl-5-methyl-hexanol, 2-Isopropylheptanol, 2-Isopropyl-4-methyl-hexanol, 2-Isopropyl-5-methylhexanol und/oder 2-Propyl-4,4-dimethylpentanol. Die Anwesenheit anderer Isomere des 2-Propylheptanols, beispielsweise 2-Ethyl-2,4-dimethylhexanol, 2-Ethyl-2-methyl-heptanol und/oder 2-Ethyl-2,5-dimethyl-hexanol im 2-Propylheptanol ist möglich, aufgrund der geringen Bildungsraten der aldehydischen Vorläufer dieser Isomere im Zuge der Aldolkondensation sind diese, wenn überhaupt, nur in Spurenmengen im 2-Propylheptanol enthalten und spielen für die Weichmachereigenschaften des aus solchen 2-Propyheptanol-Isomerengemischen hergestellten Cyclohexan-1,2-dicarbonsäure-di(2-propylheptyl)esters praktisch keine Rolle.

Bevorzugt werden zur Herstellung des Cyclohexan-1,2-dicarbonsäure-di(2-propylheptyl)esters bzw. dem als Ausgangsmaterial zur Herstellung von Cyclohexan-1,2-dicarbonsäure-di(2-propylheptyl)esters dienenden Phthalsäuredi(2-propyheptyl)esters Mischungen des 2-Propylheptanols mit einem oder mehreren der vorstehend genannten Propylheptanol-Isomeren verwendet. Die Isomerenzusammensetzung in den zur Herstellung des Cyclohexan-1,2-dicarbonsäure-di(2-propyheptyl)esters geeigneten 2-Propylheptanol-Zusammensetzungen kann je nach Art der Herstellung dieser Zusammensetzungen und der Art des verwendeten Rohstoffs schwanken und zwar sowohl bezüglich des Gehaltes an einzelnen Isomeren in diesen Zusammensetzungen als auch bezüglich des Vorhandenseins bestimmter Isomere.

Als Ausgangsmaterial zur Herstellung von 2-Propylheptanol können verschiedenerlei Kohlenwasserstoffquellen benutzt werden, beispielsweise 1-Buten, 2-Buten, Raffinat I - ein aus dem C₄-Schnitt eines Crackers nach Abtrennung von Allenen, Acetylenen und Dienen erhaltenes Alkan/Alken-Gemisch, das neben 1- und 2-Buten noch erhebliche Mengen an Isobuten enthält - oder Raffinat II, das aus Raffinat I durch Abtrennung von Isobuten erhalten wird und als Olefinkomponenten außer 1- und 2-Buten nur noch geringe Anteile an Isobuten enthält. Selbstverständlich können auch Gemische aus Raffinat I und Raffinat II als Rohstoff zur 2-Propylheptanol-Herstellung verwendet werden. Diese Olefine oder Olefingemische können nach an sich herkömmlichen Methoden mit Kobalt- oder Rhodium-Katalysatoren hydroformyliert werden, wobei aus 1-Buten ein Gemisch aus n- und iso-Valeraldehyd - die Bezeichnung iso-Valeraldehyd bezeichnet die Verbindung 2-Methylbutanal - gebildet wird, dessen n/iso-Verhältnis je nach verwendetem Katalysator und Hydroformylierungsbedingungen in relativ weiten Grenzen variieren kann.

Beispielsweise wird bei Verwendung eines mit Triphenylphosphin modifizierten homogenen Rhodium-Katalysators (Rh/TPP) aus 1-Buten n- und iso-Valeraldehyd in einem n/iso-Verhältnis von im Allgemeinen 10:1 bis 20:1 gebildet, wohingegen bei Verwendung von mit Phosphit-Liganden, beispielsweise gemäß US 5288918 oder WO 2005/028407, oder von mit Phosphoamidit-Liganden, beispielsweise gemäß WO 2002/83695, modifizierten Rhodium-Hydroformylierungskatalysatoren fast ausschließlich n-Valeraldehyd gebildet wird. Während das Rh/TPP-Katalysatorsystem 2-Buten bei der Hydroformylierung nur sehr langsam umsetzt, so dass der größte Teil des 2-Butens aus dem Hydroformylierungsgemisch wieder zurückgewonnen werden kann, gelingt die Hydroformylierung des 2-Butens mit den erwähnten Phosphit-Ligand- oder Phosphoramidit-Ligand-modifizierten Rhodium-Katalysatoren, wobei vorwiegend n-Valeraldehyd gebildet wird. Hingegen wird im olefinischen Rohstoff enthaltenes Isobuten, wenn auch mit unterschiedlicher Geschwindigkeit, von praktisch allen Katalysatorsystemen zu 3-Methylbutanal und je nach Katalysator in geringerem Umfang zu Pivalaldehyd hydroformyliert.

Die je nach verwendeten Ausgangsmaterialien und Katalysatoren erhaltenen C₅-Aldehyde, d.h. n-Valeraldehyd gegebenenfalls im Gemisch mit iso-Valeraldehyd, 3-Methylbutanal und/oder Pivalaldehyd, können vor der Aldolkondensation gewünschtenfalls vollständig oder teilweise destillativ in die Einzelkomponenten aufgetrennt werden, so dass auch hier eine Möglichkeit besteht, die Isomerenzusammensetzung der C₁₀-Alkoholkomponente der erfindungsgemäßen Estergemische zu beeinflussen und zu steuern.

Desgleichen ist es möglich, das C₅-Aldehydgemisch, wie es bei der Hydroformylierung gebildet wird, ohne die vorherige Abtrennung einzelner Isomere der Aldolkondensation zuzuführen. Bei der Aldolkondensation, die mittels eines basischen Katalysators, wie einer wässrigen Lösung von Natrium- oder Kaliumhydroxid, beispielsweise nach den in EP-A 366 089, US 4 426 524 oder US 5 434 313 beschriebenen Verfahren durchgeführt werden kann, entsteht bei Einsatz von n-Valeraldehyd als einziges Kondensationsprodukt 2-Propylheptenal, wohingegen bei Einsatz eines Gemisches isomerer C₅-Aldehyde ein Isomerengemisch aus den Produkten der Homoaldolkondensation gleicher Aldehydmoleküle und der gekreuzten Aldolkondensation unterschiedlicher Valeraldehyd-Isomere geformt wird.

Die Aldolkondensation kann durch die gezielte Umsetzung einzelner Isomere so gesteuert werden, dass überwiegend oder vollständig ein einzelnes Aldolkondensationsisomer gebildet wird. Die betreffenden Aldolkondensationsprodukte können anschließend, üblicherweise nach vorausgegangener, vorzugsweise destillativer Abtrennung aus der Reaktionsmischung und gewünschtenfalls destillativer Reinigung, mit herkömmlichen Hydrierkatalysatoren, beispielsweise den vorstehend zur Hydrierung von Aldehyden genannten, zu den entsprechenden Alkoholen oder Alkoholgemischen hydriert werden, die dann als Ausgangsalkohol zur Herstellung des Cyclohexan-1,2-dicarbonsäure-di(2-propylheptyl)esters dienen.

Wie bereits erwähnt, können die Cyclohexan-1,2-dicarbonsäure-di(2-propylheptyl)ester allein mit reinem 2-Propylheptanol verestert sein. Im Allgemeinen werden zur Herstellung dieser Ester jedoch Gemische des 2-Propylheptanols mit den genannten Propylheptanol-Isomeren eingesetzt, in denen der Gehalt an 2-Propylheptanol mindestens 50 Gew.-%, vorzugsweise 60 bis 98 Gew.-% und besonders bevorzugt 80 bis 95 Gew.-%, insbesondere 85 bis 95 Gew.-% beträgt.

Geeignete Mischungen von 2-Propylheptanol mit den Propylheptanol-Isomeren umfassen beispielsweise solche aus 60 bis 98 Gew.-% 2-Propylheptanol, 1 bis 15 Gew.-% 2-Propyl-4-methyl-hexanol und 0,01 bis 20 Gew.-% 2-Propyl-5-methyl-hexanol und 0,01 bis 24 Gew.-% 2-Isopropylheptanol, wobei die Summe der Anteile der einzelnen Bestandteile 100 Gew.-% nicht überschreitet. Bevorzugt addieren sich die Anteile der einzelnen Bestandteile zu 100 Gew.-%.

Weitere geeignete Mischungen aus 2-Propylheptanol mit den Propylheptanol-Isomeren umfassen beispielsweise solche aus 75 bis 95 Gew.-% 2-Propylheptanol, 2 bis 15 Gew.-% 2-Propyl-4-methyl-hexanol, 1 bis 20 Gew.-% 2-Propyl-5-methyl-hexanol, 0,1 bis 4 Gew.-% 2-Isopropyl-heptanol, 0,1 bis 2 Gew.-% 2-Isopropyl-4-methylhexanol und 0,1 bis 2 Gew.-% 2-Isopropyl-5-methyl-hexanol, wobei die Summe der Anteile der einzelnen Bestandteile 100 Gew.% nicht überschreitet. Bevorzugt addieren sich die Anteile der einzelnen Bestandteile zu 100 Gew.%.

Bevorzugte Mischungen von 2-Propylheptanol mit den Propylheptanol-Isomeren umfassen solche mit 85 bis 95 Gew.-% 2-Propylheptanol, 5 bis 12 Gew.-% 2-Propyl-4-methyl-hexanol und 0,1 bis 2 Gew.-% 2-Propyl-5-methylhexanol und 0,01 bis 1 Gew.-% 2-Isopropylheptanol, wobei die Summe der Anteile der einzelnen Bestandteile 100 Gew.-% nicht überschreitet. Bevorzugt addieren sich die Anteile der einzelnen Bestandteile zu 100 Gew.-%.

Bei Verwendung der genannten 2-Propylheptanol-Isomerengemische anstelle von reinem 2-Propylheptanol zur Herstellung von Cyclohexan-1,2-dicarbonsäure-di(2-propylheptyl)ester entspricht die Isomerenzusammensetzung der Alkylestergruppen dieser Ester praktisch der Zusammensetzung der zur Veresterung verwendeten Propylheptanol-Isomerengemische.

Über die Menge des Plastifizierungsmittels können Härte und Fließfähigkeit der thermoplastischen Elastomerenzusammensetzung in weiten Bereichen eingestellt werden.

### Zur Komponente c)

Die erfindungsgemäßen thermoplastischen Elastomer-Zusammensetzungen können durch Zugabe von Polyolefinen, wie Polyethylen, Polypropylen, Polybutylen, Polyisobutylen, Ethylen-Propylen-Kautschuke, Ethylen-Propylen-Dien-Kautschuk (EPDM), Styrol-Butadien-Kautschuk (SBR, der Styrolgehalt kann zwischen 1 bis 60%, bevorzugt 10 bis 50%, besonders bevorzugt 20 bis 40% liegen), Naturkautschuk, bevorzugt Metallocenpolyolefinen wie Copolymere aus Ethylen mit Buten, Penten, Hexen, Hepten, Okten, Nonen, Deken, Dodeken sowie aus höhermolekularen, bevorzugt verzweigten Olefinen mit enger Molekulargewichtsverteilung und Polyolefinen mit hoher Kristallitschmelztemperatur wie iso- oder syndiotaktischem Polypropylen, verbessert werden.

Diese Komponente c) wird in Mengen von 0 bis 50 Gew.-%, bevorzugt 1 bis 50 Gew.-%, besonders bevorzugt 5 bis 30 Gew.-%, insbesondere 10 bis 25 Gew.-% eingesetzt. Die Medienbeständigkeit der Elastomer-Zusammensetzungen, beispielsweise gegenüber Ölen und Lösungsmittel, werden verbessert. Durch Zugabe kristalliner Polyolefine wie unverzweigten oder verzweigten Polyethylenen wue HDPE (high density polyethylene), syndiotaktisches oder isotaktisches Polypropylen, bevorzugt isotaktisches Polypropylen, in Mengen von 1 bis 50 Gew.-%, bevorzugt 5 bis 30 Gew.-%, besonders bevorzugt 10 bis 25 Gew.-% kann die Wärmeformbeständigkeit verbessert und der Druckverformungsrest reduziert werden. Dies kann dann erreicht werden, wenn die Schmelzeviskosität der kristallinen Polyolefine deutlich niedriger ist als die des Blockcopolymeren und unter Scherbedingungen wie beispielsweise in einem Extruder das kristallisationsfähige Polyolefin in die kontinuierliche Phase gezwungen wird, die nach dem Abkühlen wärmeformbeständiges, kristallines Netzwerk bildet.

Besonders geeignet sind leichtfließende Polypropylen-Typen wie beispielsweise Purell® HM671T, ein hoch fließfähiges, metallocenkatalysiertes Polypropylen-Homopolymer mit einer Schmelzefließfähigkeit (melt flow rate = MFR) von 60 g/10 min (230°C/2.16 kg) von Lyondell-Basell, das für Spritzgussanwendungen empfohlen wird.

### Zur Komponente d)

Die thermoplastischen Elastomer-Zusammensetzungen können als Komponente d) Zusatzstoffe aller Art in Mengen von 0 bis 60 Gew.-%, bevorzugt 0 bis 40 Gew.-%, oftmals 1 bis 40 Gew.-%, bezogen auf die Elastomer-Zusammensetzung, enthalten.

Als Zusatzstoffe eignen sich beispielsweise faser- und pulverförmige Füll- und Verstärkungsstoffe, Stabilisatoren, Lichtschutzmittel, Flammschutzmittel, Pigmente, Farbstoffe, Verarbeitungshilfsmittel wie Gleit- und Entformungsmittel, bevorzugt anorganische Füllstoffe, wie Ton, Holzmehl, Korkmehl, Talkum, Karbonate, Sulfate, mehr oder weniger hydratisierte Oxyde, wie Titandioxid, Ca- und Mg-Silikate, Silikate wie Aerosil, Kieselgel oder Kieselgur, Phosphate wie Tricalciumphosphat, oder Ruß. Eine besondere Bedeutung besitzt das Belegen der Oberfläche beispielsweise durch Bestäuben oder durch Kontakt mit einer bevorzugt wässrigen Dispersion der erfindungsgemäßen Mischungen beispielsweise von Granulaten oder fertigen Formteilen, insbesondere durch Aerosil, Tricalciumphosphat und/oder Fettsäureamide wie Erucasäureamid.

Weitgehend transparente Mischungen sind durch den Zusatz sogenannter Nanocomposits zugänglich. Dies sind Schichtsilikate wie Montmorillonit, die bevorzugt mit Hydrophobiermitteln wie Aminen oder Salzen mit quarternisierten Aminen imprägniert wurden.

Die erfindungsgemäßen thermoplastischen Elastomer-Zusammensetzungen lassen sich wie folgt herstellen:
Je nachdem, ob das Styrol-Butadien-Blockcopolymer als Flocken (z.B. durch Wasserdampfstrippen des organischen Polymerisationslösungsmittels hergestellt und bevorzugt bei Polymeren mit sehr geringer Schmelzefließfähigkeit), als Kompaktat durch Verdichtung der oben genannten Flocken oder als Granulat durch vorherige Extrusion hergestellt wurde, sind unterschiedliche Herstellverfahren der Mischungen bevorzugt. Flocken und Kompaktate speziell von schlecht fließenden Polymeren werden bevorzugt zuerst mit dem erfindungsgemäßen Plastifizierungsmittel mit einer höheren Polarität als Weißöl und einer geringeren Polarität als Dinonyladipat sowie gegebenenfalls weiteren Ölen bevorzugt in einem Apparat gemischt, der die Flocken nicht oder nur wenig schert. Dies kann eine rotierende Trommel, ein Schaufelmischer oder ein langsam laufender Kneter sein. Geeignete Kneter/Mischer sind zum Beispiel im Kunststoff-Handbuch, Hanser Verlag, München, 1975 im Kapitel 5.1.2.1, Seite 965 bis 975 beschrieben.

Je nach Oberflächenbeschaffenheit der Flocken oder des Kompaktats migriert das Öl in unterschiedlicher Geschwindigkeit in das Polymer, wobei ein größeres Oberflächen-Volumenverhältnis die Aufnahme beschleunigt.

Bevorzugt wird so lange gemischt, bis alles Öl gebunden ist. Die Einwirkungszeit kann 1 Minute bis 1 Tag betragen, bevorzugt 2 Minuten bis eine Stunde. Die Temperatur liegt bevorzugt zwischen 20 und 200°C, bevorzugt zwischen 25 und 100°C besonders bevorzugt zwischen 30 und 50°C.

Die Polymer-Öl-Mischung wir dann bevorzugt in einen Ein- oder Zwei- oder Mehrwellenkneter oder Extruder (zum Beispiel eine ZSK von Coperion, ehemals Werner&Pfleiderer), einen BUSS-Kneter (Buss AG, Pratteln, Schweiz) oder in einen LIST-Reaktor (List AG, Arisdorf, Schweiz) überführt und darin die Temperatur durch äußere Beheizung und/oder Scherung auf Temperaturen von über 100°C, bevorzugt über 140°C werden. Geeignete Kneter/Extruder sind zum Beispiel im Kunststoff-Handbuch, Hanser Verlag, München, 1975 im Kapitel 5.1.3.3, Seite 1029 bis 1091 beschrieben. Der Kneter kann an unterschiedliche Stellen mit weiteren Polymeren und/oder Füllstoffen beaufschlagt werden. Leichtfließende Polymere können zusammen mit den ölgetränkten Flocken oder zuvor aufgeschmolzen werden, Polymere mit einer niedrigen Schmelzefließfähigkeit bevorzugt zusammen mit den ölgetränkten Flocken oder an einer späteren Stelle zu der Schmelze dosiert werden. Füllstoffe werden bevorzugt gleichzeitig mit dem Polymer-Öl-Gemisch oder später zudosiert. Speziell bei der Zugabe von Holzmehl empfiehlt sich eine möglichst späte Zugabe, bevorzugt als letzte Zugabe, um das Holz thermisch so wenig wie möglich zu belasten.

Liegt das Styrol-Butadien-Blockpolymer als Granulat mit einer ausreichenden Schmelzefließfähigkeit vor, kann es allein in einem Extruder aufgeschmolzen und das Öl an einer späteren Stelle zudosiert werden. Ebenfalls bevorzugt ist eine gleichzeitige Dosierung von Öl und Granulat und gegebenenfalls weiterer Polymerer und Füllstoffe.

Die fertig homogenisierte Mischung kann dann bevorzugt durch Unterwassergranulierung (Heißabschlag) oder Stranggranulierung (Kaltabschlag) aufgearbeitet, oder die Schmelze in einer Spritzgussmaschine weiterverarbeitet werden.

Weitere geeignete kontinuierliche oder diskontinuierliche Mischorgane sind beispielsweise Walzenstühle, Branbury-Kneter und ähnliche Organe.

Eine weitere bevorzugte Variante, die erfindungsgemäßen Plastifizierungsmittel in die Styrol-Butadien-Blockpolymere einzuarbeiten, besteht darin, es zur Polymerlösung, wie sie beispielsweise nach der Polymerisation vorliegt, zu dosieren, gegebenenfalls die Flüssigkeiten in einem bevorzugt statischen Mischer zu homogenisieren und anschließend vom Lösungsmittel zu befreien. Die Variante wird bevorzugt bei hochmolekularen Polymeren angewendet, die ohne Plastifizierungsmittel zu hochviskos für eine Schmelzeverarbeitung sind und nach der Plastifizierung eine Schmelzeviskosität, ausgedrückt als MFR, von bevorzugt 1 bis 100 g/10 min (200°C/5 kg), besonders bevorzugt von 3 bis 50, ganz besonders bevorzugt von 5 bis 20 g/10 min aufweisen.

Die Aufarbeitung erfolgt bevorzugt über eine mehrstufige Entgasung mit einer Flash-Verdampfung im ersten Schritt, wobei die Lösung vor der Verdampfung in einem Wärmetauscher auf 150 bis 250°C, bevorzugt auf 180 bis 220°C unter Druck erhitzt und durch ein Drosselventil bevorzugt gegen Drücke zwischen 100 mbar und 5 bar, besonders bevorzugt 500 mbar bis 2 bar entspannt wird, wobei das Lösungsmittel, bevorzugt Cyclohexan oder andere Kohlenwasserstoffe, die beispielsweise für die anionische Poymeisation zur Herstellung der Styrol-Butadien-Blockcopolymere geeignet sind größtensteils verdampft, bevorzugt bis zu einem Restgehalt von 1 bis 20 %.

Die Schmelze wird bevorzugt erneut auf Temperaturen zwischen 150 und 250°C erhitzt und über ein Druckhalteventil erneut in ein förderndes Organ, bevorzugt einen Ein- Zwei- oder Mehrwellenextruder entspannt, bevorzugt gegen Drücke zwischen 500 mbar und 2 bar. In mehreren Stufen kann über die Entgasungsdome des Extruders der Druck bis bevorzugt 1 bis 100 mbar, bevorzugt 5 bis 20 mbar reduziert werden, wobei die Temperatur der Polymerschmelze bevorzugt zwischen 120 und 280°C, bevorzugt zwischen 160 und 240°C gehalten wird. die Schmelze kann dann beispielsweise durch Unterwassergranulierung in Granulatform überführt werden.

Herstellung und Eigenschaften solcher Blockcopolymeren sind beispielsweise in WO 1995/35335 oder WO 1997/40079 beschrieben, bzw. durch anionische Polymerisation in einem unpolaren Lösungsmittel unter Zusatz eines polaren Cosolvents oder eines Kaliumsalzes erhältlich. Derartige Polymere werden beispielsweise von der BASF unter dem Handelsnamen Styroflex^{®} 2G 66 verkauft. Ebenfalls geeignete Blockcopolymere sind in US-A 2003/0176582 als "Controlled Distribution Polymers" mit einer statistischen Styrol-Butadien-Weichphase beschrieben, die einen kontrollierten Zusammensetzungsgradienten aufweist.

Die erfindungsgemäßen Elastomer-Zusammensetzungen lassen sich in einer bevorzugten Variante beispielsweise wie folgt herstellen:
Blockcopolymere wie beispielsweise Styroflex^{®} 2G 66 (Hersteller BASF) mit einer Schmelzefließfähigkeit (melt flow rate, MFR) im Bereich von 2 bis 50 g/10 min (200°C/5 kg), bevorzugt 6 bis 20 g/10 min (200°C/5 kg) werden bevorzugt als Granulat, Kompaktat oder Pulver kontinuierlich über eine Wägeeinrichtung wie etwa eine Bandwaage in die Öffnung eines Extruders, bevorzugt eines gegensinnig laufenden Zweischneckenextruders, wie er etwa von der Firma Coperion unter der Bezeichnung ZSK angeboten wird, dosiert. Bevorzugt in die gleiche Öffnung werden gegebenenfalls weitere Polymere, wie sie als Komponente c) beschrieben sind, dosiert. Das Längen-zu-Schneckendurchmesser-Verhältnis der Extruderschnecken kann zwischen 10 und 80, bevorzugt zwischen 20 und 60 und besonders bevorzugt zwischen 30 und 50 liegen, der Schneckendurchmesser je nach gewünschtem Durchsatz in einem sehr weiten Bereich beispielsweise zwischen 10 und 200 mm variieren.

Für Durchsätze von 2 bis 10 kg Elastomer-Zusammensetzung eignen sich beispielsweise Schneckendurchmesser zwischen 18 und 35 mm, bevorzugt 25 bis 30 mm, die von Coperion unter der Bezeichnung ZSK 25 oder ZSK 30 angeboten werden. Die Dosieröffnung für das Blockcopolymer befindet sich bevorzugt getriebeseitig nach an der rückwärtigen Abdichtung zum Getriebe hin.
Die Schnecken bestehen bevorzugt überwiegend aus schraubenförmigen Förderelementen, wobei bevorzugt ein oder mehrere nichtfördernde Knetelemente enthalten sein können. Ein Knetelement ist bevorzugt in Förderrichtung nach der Dosieröffnung platziert. Die Zuführung des Weichmacheröls über bevorzugt ein dicht verschraubtes Rohr wird bevorzugt nach dem Knetelement angeordnet, so dass die Granulatdosieröffnung und Öldosierstelle durch das Knetelement voneinander getrennt sind. Diese Maßnahme verhindert ein Rücklaufen des Öls in die Förderöffnung, ist aber nicht zwingend erforderlich. Nach der Öldosierstelle werden in Förderrichtung bevorzugt ein oder weitere Knetelemente angeordnet, die durch fördernde Elemente getrennt sein können. Das Temperaturprofil des Schneckengehäuses wir bevorzugt wie folgt eingestellt: Im Bereich der Polymerdosierung beträgt die Temperatur des Gehäuses, das elektrisch oder mit heißem Öl beheizt werden kann, bevorzugt zwischen 120 und 200°C, besonders bevorzugt zwischen 140 und 180°C.

Dieser Temperaturbereich wird bevorzugt bis zur Position der Weichmacheröldosierung eingehalten. Nachfolgende Gehäuseelemente werden bei Ölgehalten der Polymermischung von besonders über 15% auf bevorzugt 120 bis 160°C temperiert. Die Schneckendrehzahl liegt bevorzugt im Bereich von 50 bis 250 Umdrehungen pro Minute, besonders bevorzugt im Bereich von 100 bis 200 Umdrehungen pro Minute. Das bevorzugt vorgemischte Weichmacheröl wird zweckmäßig aus einem Vorratsbehälter öder -tank über bevorzugt eine Zahnradpumpe über bevorzugt ein Metallrohr oder -schlauch zum Extruder gefördert, wobei bevorzugt sich zusätzlich ein Durchflussmesser zur Mengenkontrolle in der Förderleitung befindet.

Am Ende des Extruders ist bevorzugt eine Unterwassergranulierung, auch Heißabschlag genannt, angeordnet, wie er beispielsweise von der Firma Gala angeboten wird. Die Verweilzeit der Wasser-Granulat-Mischung beträgt bevorzugt 10 Sekunden bis 60 Minuten, besonders bevorzugt 2 bis 15 Minuten, um die Klebeneigung des Granulats zu vermindern. Die Wasser-Granulat-Mischung wird dann bevorzugt über einen Sieb getrennt, wobei das Wasser bevorzugt im Kreis gefahren und über einen Wärmetauscher gekühlt wird. Das Wasser enthält bevorzugt ein Antiblockmittel, um das Zusammenkleben der Granulatkörner zu verhindern, bevorzugt eine Fettsäureamid-Dispersion. Das umlaufende Wasser wird bevorzugt auf Temperaturen unter 40°C gekühlt, besonders bevorzugt unter 20°C, ganz besonders bevorzugt unter 10°C. Das abgesiebte Granulat wird anschließend bevorzugt in einem Luftstrom trockengeblasen und bevorzugt mit einem weiteren, staubförmigen Antiblockmittel wie beispielsweise Tricalciumphosphat oder Silica bestäubt. Es kann dann in ein Silo verbracht oder in Säcke oder anderweitige Packmittel abgefüllt werden.

Die erfindungsgemäßen Elastomer-Zusammensetzungen sind elastisch, thermoplastisch verarbeitbar und durch Wiederaufschmelzen leicht recyclierbar. Wegen der hervorragenden Verarbeitbarkeit und Verträglichkeit mit Thermoplasten auf Styrolbasis, wie glasklares Polystyrol (GPPS), schlagfestes Polystyrol (HIPS), Styrol-Butadien-Blockcopolymeren wie Styrolux® der BASF SE oder K-Resin® (Phillips), Styrol-Acrylnitril-Polymeren (SAN), Acrylnitril-Butadien-Styrol-Polymeren (ABS) oder Polyphenylenether (PPE) oder GPPS/PPE-Mischungen bieten sich die erfindungsgemäßen Elastomer-Zusammensetzungen im Zweikomponenten-{2K}-Spritzguss an.

Die Grenzfläche zwischen der Hartkomponenten und der erfindungsgemäßen Elastomer-Zusammensetzungen als Weichkomponente ist außerdem transparent. Mit dem 2K-Spritzguß lassen sich so flexible und starre Teile in einem Guss herstellen. Als Hartkomponente kommen ferner Polyester wie Polybutylenterephthalat, aber auch solche mit anderen Diolkomponenten wie 1,3-Propandiol, solche mit Adipinsäure, Sebacinsäure, Bernsteinsäure und anderen aliphatischen zweibasigen Säuren auch in Kombination mit aromatischen Dicarbonsäuren, Polycarbonat oder deren Mischungen, bevorzugt auf der Basis von Bisphenol A in Frage.

Die erfindungsgemäßen Elastomer-Zusammensetzungen lassen sich auch ohne Koronabehandlung gut bemalen und bedrucken. Sie eignet sich daher zur Herstellung von elastischen und flexiblen Formteilen, wie Spielzeuge, Spielzeugteile, beispielsweise Puppen und Puppenköpfe, Actionfiguren, Beißringe, Modellbaukomponenten, in Freizeit und Wassersport, an Sport- und Fitnessgeräten, Massagestäbe und -aufsätze, "Soft-Touch"-Anwendungen, wie Griffe oder Antirutschausrüstungen, Antirutschmatten und -füße für Maschinen und Haushaltsgeräte, als Bad- und Duschwanneneinsatz, im Innen- und Kofferraum von Fahrzeugen, Dichtungen, Schalter, Gehäuse mit Dichtlippen, Bedienknöpfe, Flexodruckplatten, Schuhsohlen, Schläuche, Profile, medizinische Artikel wie Infusionsbestecke, Dialyseeinheiten und Atemmasken, Hygieneartikel wie Zahnbürsten, Kabel-, Isolier- und Mantelmassen, Schallschutzelemente, Faltenbälge, Walzen oder Walzenummantelungen, Anti-Fussel-Walzen, Teppichrücken, Fußbodenbeläge, insbesondere solche mit Linoleumanmutung, Dehn- und Clingfolien, Stretchhauben, Regenschutzkleidung.

Die nachfolgenden Beispiele und die Patentansprüche erläutern die Erfindung.

### Herstellung eines erfindungsgemäßen Diisononylcyclohexan-1,2-dicarbonsäureesters

### Beispiel 1 (Butendimerisierung)

Die Butendimerisierung wurde in einem adiabatischen Reaktor bestehend aus zwei Teilreaktoren (Länge: jeweils 4 m, Durchmesser: jeweils 80 cm) mit Zwischenkühlung bei 30 bar kontinuierlich durchgeführt. Als Einsatzprodukt wurde ein Raffinat II mit folgender Zusammensetzung verwendet:

| | |
|---|---|
| i-Butan: | 2 Gew.-% |
| n-Butan: | 10 Gew.-% |
| i-Buten: | 2 Gew.-% |
| Buten-1: | 32 Gew.-% |
| Buten-2-trans: | 37 Gew.-% |
| Buten-2-cis: | 7 Gew.-% |

Als Katalysator diente ein Material gemäß WO 1995/14647 bestehend aus 50 Gew.-% NiO, 12,5 Gew.-% TiO₂, 33,5 Gew.-% SiO₂ und 4 Gew.-% Al₂O₃ in Form von 5x5 mm-Tabletten.

Die Umsetzung wurde mit einem Durchsatz von 0,375 kg Raffinat II/I Katalysator xh, einer Rückführung C₄/Raffinat II von 3, einer Eintrittstemperatur am 1. Teilreaktor von 38 °C und einer Eintrittstemperatur am 2. Teilreaktor von 60 °C durchgeführt. Der Umsatz bezogen auf die im Raffinat II enthaltenen Butene lag bei 83,1 %; die Selektivität zu den gewünschten Oktenen betrug 83,3 %. Durch fraktionierte Destillation des Reaktoraustrages wurde die Oktenfraktion von unumgesetztem Raffinat II und den Hochsiedern abgetrennt.

### Beispiel 2 (Hydroformylierung und anschließende Hydrierung)

750 g des in Beispiel 1 hergestellten Oktengemisches wurden diskontinuierlich in einem Autoklav mit 0,13 Gew.-% Dikobaltoktacarbonyl Co₂(CO)₈ als Katalysator unter Zusatz von 75 g Wasser bei 185 °C und unter einem Synthesegasdruck von 280 bar bei einem Mischungsverhältnis von H₂ zu CO von 60/40 5 Stunden umgesetzt. Der Verbrauch an Synthesegas, zu erkennen an einem Druckabfall im Autoklaven wurde durch Nachpressen ergänzt. Nach dem Entspannen des Autoklaven wurde der Reaktionsaustrag mit 10 Gew.-%iger Essigsäure durch Einleiten von Luft oxidativ vom Kobaltkatalysator befreit und die organische Produktphase mit Raney-Nickel bei 125 °C und einem Wasserstoffdruck von 280 bar 10 h hydriert. Durch fraktionierte Destillation des Reaktionsaustrages wurde die Isononanolfraktion von den C₈-Paraffinen und den Hochsiedern abgetrennt. Eine Probe des so erhaltenen Isononanol-Gemisches wurde nach Trimethylsilylierung mittels N-Methyl-N-trimethylsilyltrifluoracetamid gaschromatographisch analysiert. Dabei wurde die folgende Zusammensetzung ermittelt:

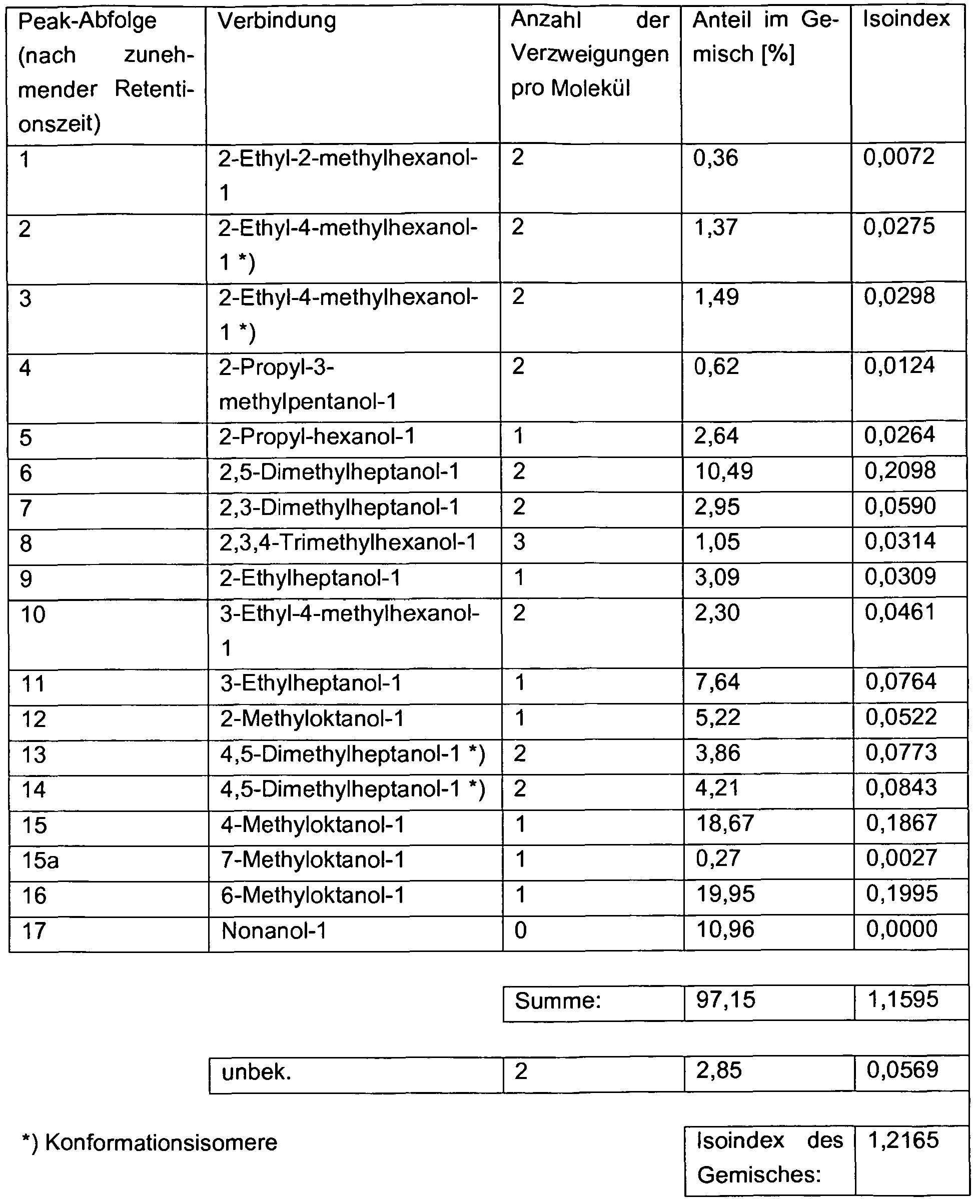

### Beispiel 3 (Veresterung)

865,74 g der in Beispiel 2 erhaltene Isononanolfraktion (20 % Überschuß bzgl. Phthalsäureanhydrid) wurden mit 370,30 g Phthalsäureanhydrid und 0,42 g Isopropylbutyltitanat als Katalysator in einem 2 I-Autoklaven unter N₂-Einperlung (10 I/h) bei einer Rührgeschwindigkeit von 500 U/min und einer Reaktionstemperatur von 230 °C umgesetzt. Das gebildete Reaktionswasser wurde fortlaufend mit dem N₂-Strom aus dem Reaktionsgemisch entfernt. Die Reaktionszeit betrug 180 min. Anschließend wurde der Isononanol-Überschuß bei einem Vakuum von 50 mbar abdestilliert. 1000 g des Roh-Diisononylphthalates wurden mit 150 ml 0,5 %iger Natronlauge durch 10minütiges Rühren bei 80°C neutralisiert.

Es bildete sich ein Zwei-Phasen-Gemisch mit einer oberen organischen Phase und einer unteren wäßrigen Phase (Ablauge mit hydrolisiertem Katalysator). Die wäßrige Phase wurde abgetrennt und die organische Phase zweimal mit 200 ml H₂O nachgewaschen. Zur weiteren Reinigung wurde das neutralisierte und gewaschene Diisononylphthalat mit Wasserdampf bei 180°C und 50 mbar Vakuum 2 h ausgedämpft. Das gereinigte Diisononylphthalat wurde dann 30 min bei 150 °C/50 mbar mittels Durchleiten eines N₂-Stroms (2 I/h) getrocknet, anschließend mit Aktivkohle 5 min verrührt und über eine Nutsche mit Filterhilfsmittel Supra-Theorit 5 abgesaugt (Temperatur 80 °C).

Das so erhaltene Diisononylphthalat besitzt eine Dichte von 0,973 g/cm³, eine Viskosität von 73,0 mPa*s, einen Brechungsindex n_{D}²⁰ von 1,4853, ein Säurezahl von 0,03 mg KOH/g, einen Wassergehalt von 0,03 % und eine Reinheit nach GC von 99,83 %.

### Beispiel 4 (Hydrierung)

### Beispiel 4a (Herstellung des Hydrierkatalysators)

50g eines meso-/ makroporösen Aluminiumoxidträgers in Form von 4mm Extrudaten, der eine BET-Oberfläche von 238 m²/g und ein Porenvolumen von 0,45 ml/g besaß (Porendurchmesser von ca. 33% des Gesamtporenvolumens: 50 nm bis 10 000 nm; Porendurchmesser von ca. 67% des Gesamtporenvolumens: 2 nm bis 50 nm), wurde mit einer wässrigen Ruthenium-nitrosylnitrat-Lösung, wie folgt, getränkt: 2,51 g Ruthenium-nitrosylnitrat-Lösung wurden in zwei gleiche Teile geteilt und diese jeweils mit destilliertem Wasser auf ein Volumen von 16 ml verdünnt (die Ruthenium-nitrosylnitrat-Lösung hatte eine Konzentration von 0,8 Gew. %).

Der erste Teil der Ruthenium-nitrosylnitrat-Lösung wurde auf den Träger aufgebracht. Der so getränkte Katalysatorträger wurde bei 120°C 16h getrocknet. Nach dieser Prozedur erfolgte der zweite Tränkschritt und im Anschluss daran wurde der Katalysator bei 120°C 16h getrocknet.
Der getrocknete Katalysator wurde im Drehrohrofen bei 200°C 2h mit Wasserstoff reduziert und in einem 5% Luft/N2 Gemisch passiviert (Aufheizzeit: 60min). Der fertige Katalysator hatte einen Gehalt von 0,5 Gew.-% Ruthenium, berechnet als Ru.

### Beispiel 4b) (Hydrierung)

Eine kontinuierlich betriebene Anlage bestehend aus zwei hintereinander geschalteten Rohrreaktoren (Hauptreaktor 160 mL, dᵢₙₙₑₙ = 12 mm, I = 1400 mm und Nachreaktor 100 mL, dᵢₙₙₑₙ = 12 mm, I = 1000 mm) wurde mit dem im Herstellbeispiel beschriebenen Katalysator befüllt (Hauptreaktor 71,5g, Nachreaktor 45,2g). Der Hauptreaktor wurde in Rieselfahrweise mit Umlauf betrieben (Flüssigkeitsbelastung 12 m/h), der Nachreaktor im geraden Durchgang in Sumpffahrweise. Der in Beispiel 3 hergestellte Phthalsäureester wurde mit reinem Wasserstoff bei einer mittleren Temperatur von 128°C im Hauptreaktor und 128°C im Nachreaktor und einem Druck von 200 bar durch die Reaktorkaskade gepumpt (Zulauf 66 g/h). Die Katalysatorbelastung im Hauptreaktor betrug 0,6 kg Phthalsäureester/L_{Kat}.×h. Die gaschromatographische Analyse des Reaktionsaustrages zeigte, daß der Phthalsäureester zu >99,9% umgesetzt worden war. Diisononyl-cyclohexan-1,2-dicarbonsäureester konnte mit einer Selektivität von 99,1% erhalten werden. Der in Beispiel 3 hergestellte Phthalsäureester konnte noch mit 26 ppm im Austrag nachgewiesen werden. Als Nebenkomponenten konnten etwa 0,9 Gew.-% Leichtsieder (Komponenten mit einem niedrigeren Siedepunkt, als der des Cyclohexandicarbonsäureester) nachgewiesen werden. Der Cyclohexandicarbonsäureester wurde als Gemisch der cis- und trans-Isomeren im Verhältnis cis/trans von 92:8 erhalten.

### Beispiel 5

### (Herstellung der erfindungsgemäßen thermoplastischen Elastomer-Zusammensetzungen)

Die Herstellung eines symmetrischen S-B/S-S -Dreiblockcopolymeren erfolgte analog Beispiel Nr. 2 aus WO-A-97/40079, aber mit veränderten Einsatzstoffmengen. In einem 50 Liter-Reaktor wurden 22,8 Liter getrocknetes Cyclohexan und 1638 Gramm trockenes Styrol vorgelegt und bei 40°C mit 87,3 mmol sec-Butyllithium (12 Gew-% in Cyclohexan) und 2,36 mmol Kaliumtertiäramylat (5 Gew-% in Cyclohexan) gestartet. Die Temperatur stieg auf 68°C. Nach Kühlen auf 50°C wurden 1250 g Butadien und gleichzeitig 1126 g Styrol zugegeben, wobei die Temperatur auf 74°C stieg. Es wurden auf die gleiche Weise noch zweimal je 1250 g Butadien und 1126 g Styrol zugegeben, und nach Ende der Polymerisation des statistischen Styrol-Butadien-Weichblocks nochmals bei 70°C 1638 g Styrol.

Nach Erreichen der Endtemperatur von 80°C wurde mit 200 mmol Isopropanol terminiert, mit Kohlendioxid/Wasser angesäuert und mit 0,15% Sumilizer® GS, 0,25 Irganox® 1010 und 0,3% Irgaphos® 168 stabilisiert und die Lösung auf einem Entgasungsextruder (ZSK 25 von Coperion) eingedampft und granuliert. Die zahlenmittlere Molmasse Mn betrug 136.000 g/mol, die gewichtsmittlere Mw 163.000 g/mol (GPC, PS-Eichung). In der DSC wurde je eine Glasstufe zwischen (-25) und (-55)°C und zwischen 60 und 100°C gefunden. Das symmetrische S-B/S-S - Dreiblockcopolymer kann bis zu 10 Gew.-% Weißöl aufnehmen. Durch Abmischung von Weißöl mit Cyclohexan-1,2-dicarbonsäurediisononylester (DINCH) in den in Tabelle 1 angegebenen Verhältnissen kann der Gesamtölgehalt bis über 50 Gew.-% gesteigert werden, ohne dass Ölausschwitzungen beobachtet werden. Tabelle 1 gibt die Stabilitätsgrenze wieder.

**Tabelle 1: Stabilitätsgrenze des Weißölanteils bei unterschiedlichem Gesamtölanteil in der thermoplastischen Elastomer-Zusammensetzung**

| Gesamtölgehalt [Gew.-%], bezogen auf die Elastomer-Zusammensetzung | 10 | 20 | 30 | 40 | 50 |
|---|---|---|---|---|---|
| Stabilitätsgrenze bei Weißölanteil [%] | 100 | 70 | 50 | 42 | 36 |

Das Blockcopolymere wurde auf einem Zweischneckenextruder ZSK 25/2 bei 180°C mit einer vorgemischten Weißöl/Cyclohexan-1,2-dicarbonsäurediisononylester (DINCH)-Mischung (Mischungsverhältnis 33/67) vermischt. Gesamtölanteil und Eigenschaften der so erhaltenen thermoplastischen Elastomer-Zusammensetzung sind in Tabelle 2 zusammengestellt. Als Weißöl wurde medizinisches Weißöl mit einer Viskosität von 70 Centistokes der Firma Wintershall (WI-NOG^{®} 70) verwendet.

Die DSC-Messungen belegen, dass die Weichphase selektiv durch die Ölmischung plastifiziert wird. Die Glasübergangstemperatur der Weichphase Tg (weich) wird von ca. (-40) bis (-78)°C bei 50% Ölanteil abgesenkt, während die Glasübergangstemperatur der Hartphase Tg (hart) praktisch unbeeinflusst bei ca. 60°C liegt.

Die Shore-A-Härte nimmt praktisch linear mit steigendem Ölgehalt ab. Selbst bei einer Shore-A-Härte im Bereich von 10 liegen die mechanischen Werte noch auf einem akzeptablen Niveau. Die Reißdehnung erreicht bei 40 Gew.-% Gesamtölgehalt ein Maximum von 1200 %.

**Tabelle 2: Eigenschaften der thermoplastischen Elastomer-Zusammensetzung in Abhängigkeit vom Gesamtölgehalt einer Weißöl/Cyclohexan-1,2-dicarbonsäurediisononylester (DINCH)-Mischung (Mischungsverhältnis 33/67)**

| Gesamtölgehalt [Gew. -%] | 0 | 5 | 10 | 20 | 30 | 40 | 50 |
|---|---|---|---|---|---|---|---|
| Glasübergangstemperatur der Weichphase Tg [°C] | -39 | -44 | -50 | -58 | -65 | -72 | -78 |
| Shore-Härte A | 82 | 70 | 64 | 48 | 31 | 17 | 11 |
| Reißfestigkeit [N/mm²] | 27 | 24 | 23 | 19 | 12 | 5 | 3 |
| Reißdehnung [%] | 600 | 700 | 800 | 980 | 1150 | 1200 | 1100 |

## Patentansprüche

1. Thermoplastische Elastomer-Zusammensetzung, bestehend aus:
a) 5 bis 99 Gew.-% eines Blockcopolymeren, das aus Hartblöcken A aus vinylaromatischen Monomeren und ein oder mehreren statistischen Weichblöcken B von unhydrierten oder hydrierten Blockcopolymerisaten aus Dienen und vinylaromatischen Monomeren aufgebaut ist,
b) 1 bis 95 Gew.-% eines Plastifizierungsmittels mit einer höheren Polarität als Weißöl und einer geringeren Polarität als Dinonyladipat,
c) 0 bis 50 Gew.-% eines Polyolefines und
d) 0 bis 60 Gew.-% Zusatzstoffe,
wobei die Summe aus den Komponenten a) bis d) 100 Gew.-% beträgt, und wobei als Plastizifierungsmittel b) Mischungen aus Cyclohexan-1,2-dicarbonsäurediisononylester mit Weißöl in einem Mischungsverhältnis von 30:70 bis 70:30 eingesetzt werden.

2. Thermoplastische Elastomer-Zusammensetzung nach Anspruch 1, **dadurch gekennzeichnet, dass** sie besteht aus:
a) 10 bis 97 Gew.-% des Blockcopolymeren,
b) 3 bis 90 Gew. -% des Plastifizierungsmittels,
c) 0 bis 50 Gew.-% eines Polyolefines und
d) 0 bis 40 Gew.-% Zusatzstoffe.

3. Thermoplastische Elastomer-Zusammensetzung nach Anspruch 1 oder 2, **dadurch gekennzeichnet, dass** sie besteht aus:
a) 49 bis 94 Gew.-% eines Blockcopolymeren, das aus Hartblöcken A aus vinylaromatischen Monomeren und ein oder mehreren statistischen Weichblöcken B von unhydrierten oder hydrierten Blockcopolymerisaten aus Dienen und vinylaromatischen Monomeren aufgebaut ist,
b) 4 bis 49 Gew.-% eines Plastifizierungsmittels mit einer höheren Polarität als Weißöl und einer geringeren Polarität als Dinonyladipat,
c) 1 bis 50 Gew.-% eines Polyolefines und
d) 0 bis 40 Gew.-% Zusatzstoffe.

4. Thermoplastische Elastomer-Zusammensetzung nach einem der Ansprüche 1 bis 3, **dadurch gekennzeichnet, dass** sie besteht aus:
a) 49 bis 94 Gew.-% eines Blockcopolymeren, das aus Hartblöcken A aus vinylaromatischen Monomeren und ein oder mehreren statistischen Weichblöcken B von unhydrierten oder hydrierten Blockcopolymerisaten aus Dienen und vinylaromatischen Monomeren aufgebaut ist,
b) 4 bis 49 Gew.-% eines Plastifizierungsmittels mit einer höheren Polarität als Weißöl und einer geringeren Polarität als Dinonyladipat,
c) 1 bis 50 Gew.-% eines Polyolefines und
d) 1 bis 40 Gew.-% Zusatzstoffe.

5. Verfahren zur Herstellung einer thermoplastischen Elastomer-Zusammensetzung nach einem der Ansprüche 1 bis 4, **dadurch gekennzeichnet, dass** man Blockcopolymere mit einer Schmelzefließfähigkeit von 2 bis 50 g/10 min kontinuierlich in einen Extruder gibt und dann ein Plastifizierungsmittel mit einer höheren Polarität als Weißöl und einer geringeren Polarität als Dinonyladipat und gegebenenfalls weitere Komponenten zudosiert.

6. Verfahren zur Herstellung einer thermoplastischen Elastomer-Zusammensetzung nach Anspruch 5, **dadurch gekennzeichnet, dass** das Verhältnis von Länge des Extruders zum Schneckendurchmesser der Extruderschnecken 10:1 und 80:1 beträgt.

7. Verfahren zur Herstellung von elastischen und flexiblen Formteilen, **dadurch gekennzeichnet, dass** man eine thermoplastische Elastomer-Zusammensetzung gemäß einem der Ansprüche 1 bis 4 verwendet.

8. Verwendung thermoplastische Elastomer-Zusammensetzung gemäß einem der Ansprüche 1 bis 4 zur Herstellung von elastischen und flexiblen Formteilen.

9. Verfahren zur Herstellung von Formteilen mit steifen und flexiblen Bereichen, **dadurch gekennzeichnet, dass** man eine thermoplastische Elastomer-Zusammensetzung gemäß einem der Ansprüche 1 bis 4 als flexible Komponente und ein schlagzähmodifiziertes oder nicht modifiziertes Styrolhomo- oder -copolymer, einen Polyester oder Polycarbonat als steife Komponente im Zweikomponenten-Spritzguß einsetzt.

10. Verwendung thermoplastische Elastomer-Zusammensetzung gemäß einem der Ansprüche 1 bis 4 zur Herstellung von Formteilen mit steifen und flexiblen Bereichen.

11. Formteile mit steifen und flexiblen Bereichen, erhältlich nach einem Verfahren gemäß einem der Ansprüche 5, 6, 7 oder 9.

12. Elastische und flexible Formteile, erhältlich nach dem Verfahren gemäß einem der Ansprüche 5, 6, 7 oder 9.

13. Spielzeuge, Spielzeugteile, beispielsweise Puppen und Puppenköpfe, Actionfiguren, Beißringe, Modellbaukomponenten, in Freizeit und Wassersport, an Sport- und Fitnessgeräten, Massagestäbe und -aufsätze, "Soft-Touch"-Anwendungen, wie Griffe oder Antirutschausrüstungen, Antirutschmatten und -füße für Maschinen und Haushaltsgeräte, als Bad- und Duschwanneneinsatz, im Innen- und Kofferraum von Fahrzeugen, Dichtungen, Schalter, Gehäuse mit Dichtlippen, Bedienknöpfe, Flexodruckplatten, Schuhsohlen, Schläuche, Profile, medizinische Artikel wie Infusionsbestecke, Dialyseeinheiten und Atemmasken, Hygieneartikel wie Zahnbürsten, Kabel-, Isolier- und Mantelmassen, Schallschutzelemente, Faltenbälge, Walzen oder Walzenummantelungen, Anti-Fussel-Walzen, Teppichrücken, Fußbodenbeläge, insbesondere solche mit Linoleumanmutung, Dehn- und Clingfolien, Stretchhauben, Regenschutzkleidung erhältlich nach dem Verfahren gemäß einem der Ansprüche 5, 6, 7 oder 9.

## Claims

1. A thermoplastic elastomer composition consisting of:
a) 5% to 99% by weight of a block copolymer synthesized from hard blocks A of vinylaromatic monomers and one or more random soft blocks B of unhydrogenated or hydrogenated block copolymers of dienes and vinylaromatic monomers,
b) 1 % to 95% by weight of a plasticizer having a higher polarity than white oil and a lower polarity than dinonyl adipate,
c) 0% to 50% by weight of a polyolefin, and
d) 0% to 60% by weight of additives,
the sum of components a) to d) being 100% by weight, and
mixtures of diisononyl cyclohexane-1,2-dicarboxylate with white oil in a mixture ratio of 30:70 to 70:30 being used as plasticizers b).

2. The thermoplastic elastomer composition according to claim 1, consisting of:
a) 10% to 97% by weight of the block copolymer,
b) 3% to 90% by weight of the plasticizer,
c) 0% to 50% by weight of a polyolefin, and
d) 0% to 40% by weight of additives.

3. The thermoplastic elastomer composition according to claim 1 or 2, consisting of:
a) 49% to 94% by weight of a block copolymer synthesized from hard blocks A of vinylaromatic monomers and one or more random soft blocks B of unhydrogenated or hydrogenated block copolymers of dienes and vinylaromatic monomers,
b) 4% to 49% by weight of a plasticizer having a higher polarity than white oil and a lower polarity than dinonyl adipate,
c) 1 % to 50% by weight of a polyolefin, and
d) 0% to 40% by weight of additives.

4. The thermoplastic elastomer composition according to any of claims 1 to 3, consisting of:
a) 49% to 94% by weight of a block copolymer synthesized from hard blocks A of vinylaromatic monomers and one or more random soft blocks B of unhydrogenated or hydrogenated block copolymers of dienes and vinylaromatic monomers,
b) 4% to 49% by weight of a plasticizer having a higher polarity than white oil and a lower polarity than dinonyl adipate,
c) 1% to 50% by weight of a polyolefin, and
d) 1 % to 40% by weight of additives.

5. A process for preparing a thermoplastic elastomer composition according to any of claims 1 to 4, wherein block copolymers having a melt flow rate of 2 to 50 g/10 min are introduced continuously into an extruder and then a plasticizer having a higher polarity than white oil and a lower polarity than dinonyl adipate and optionally further components are metered in.

6. The process for preparing a thermoplastic elastomer composition according to claim 5, wherein the ratio of length of the extruder to the screw diameter of the extruder screws is 10:1 and 80:1.

7. A process for producing elastic and flexible moldings, which comprises using a thermoplastic elastomer composition according to any of claims 1 to 4.

8. The use of a thermoplastic elastomer composition according to any of claims 1 to 4 for producing elastic and flexible moldings.

9. A process for producing moldings having rigid and flexible regions, which comprises using a thermoplastic elastomer composition according to any of claims 1 to 4 as flexible component and an impact-modified or unmodified styrene homopolymer or copolymer, a polyester or a polycarbonate as rigid component, by two-component injection molding.

10. The use of a thermoplastic elastomer composition according to any of claims 1 to 4 for producing moldings having rigid and flexible regions.

11. A molding having rigid and flexible regions, obtainable by the process according to any of claims 5, 6, 7 or 9.

12. An elastic and flexible molding obtainable by the process according to any of claims 5, 6, 7 or 9.

13. Toys, parts of toys, such as dolls and doll heads, action figures, teething rings, model making components, in leisure and water sports, on sports and fitness equipment, massage rods and massage attachments, soft-touch applications, such as handles or nonslip finishes, nonslip mats and nonslip feet for machinery and household appliances, as bathtub and shower-tray inserts, in vehicle interiors and trunks, seals, switches, housings with sealing lips, pushbuttons, flexographic printing plates, footwear soles, hoses, profiles, medical articles such as infusion instruments, dialysis units, and respiration masks, hygiene articles such as toothbrushes, cable compositions, insulating compositions, and sheathing compositions, noise prevention elements, bellows, rolls or roll coverings, antilint rolls, carpet backings, floor coverings, more particularly those resembling linoleum, stretch and cling films, stretch covers, rainwear, obtainable by the process according to any of claims 5, 6, 7 or 9.

## Revendications

1. Composition thermoplastique d'élastomère, constituée par :
a) 5 à 99% en poids d'un copolymère séquencé, qui est formé de blocs durs A de monomères aromatiques de vinyle et d'un ou de plusieurs blocs souples B statistiques de copolymères séquencés non hydrogénés ou hydrogénés de diènes et de monomères aromatiques de vinyle,
b) 1 à 95% en poids d'un plastifiant d'une polarité supérieure à celle de l'huile blanche et d'une polarité inférieure à celle de l'adipate de dinonyle,
c) 0 à 50% en poids d'une polyoléfine et
d) 0 à 60% en poids d'additifs,
la somme des composants a) à d) valant 100% en poids et des mélanges d'ester diisononylique de l'acide cyclohexane-1,2-dicarboxylique avec de l'huile blanche dans un rapport de mélange de 30:70 à 70:30 étant utilisés comme plastifiant b).

2. Composition thermoplastique d'élastomère selon la revendication 1, **caractérisée en ce qu'**elle est constituée par :
a) 10 à 97% en poids du copolymère séquencé,
b) 3 à 90% en poids du plastifiant,
c) 0 à 50% en poids d'une polyoléfine et
d) 0 à 40% en poids d'additifs.

3. Composition thermoplastique d'élastomère selon la revendication 1 ou 2, **caractérisée en ce qu'**elle est constituée par :
a) 49 à 94% en poids d'un copolymère séquencé, qui est formé de blocs durs A de monomères aromatiques de vinyle et d'un ou de plusieurs blocs souples B statistiques de copolymères séquencés non hydrogénés ou hydrogénés de diènes et de monomères aromatiques de vinyle,
b) 4 à 49% en poids d'un plastifiant d'une polarité supérieure à celle de l'huile blanche et d'une polarité inférieure à celle de l'adipate de dinonyle,
c) 1 à 50% en poids d'une polyoléfine et
d) 0 à 40% en poids d'additifs.

4. Composition thermoplastique d'élastomère selon l'une quelconque des revendications 1 à 3, **caractérisée en ce qu'**elle est constituée par :
a) 49 à 94% en poids d'un copolymère séquencé, qui est formé de blocs durs A de monomères aromatiques de vinyle et d'un ou de plusieurs blocs souples B statistiques de copolymères séquencés non hydrogénés ou hydrogénés de diènes et de monomères aromatiques de vinyle,
b) 4 à 49% en poids d'un plastifiant d'une polarité supérieure à celle de l'huile blanche et d'une polarité inférieure à celle de l'adipate de dinonyle,
c) 1 à 50% en poids d'une polyoléfine et
d) 1 à 40% en poids d'additifs.

5. Procédé pour la préparation d'une composition thermoplastique d'élastomère selon l'une quelconque des revendications 1 à 4, **caractérisé en ce qu'**on introduit en continu des copolymères séquencés présentant une aptitude à l'écoulement en masse fondue de 2 à 50 g/10 min dans une extrudeuse puis on ajoute en dosant un plastifiant d'une polarité supérieure à celle de l'huile blanche et d'une polarité inférieure à celle de l'adipate de dinonyle et le cas échéant d'autres composants.

6. Procédé pour la préparation d'une composition thermoplastique d'élastomère selon la revendication 5, **caractérisé en ce que** le rapport de la longueur de l'extrudeuse au diamètre de la vis sans fin de l'extrudeuse est de 10:1 et 80:1.

7. Procédé pour la production de pièces moulées élastiques et souples, **caractérisé en ce qu'**on utilise une composition thermoplastique d'élastomère selon l'une quelconque des revendications 1 à 4.

8. Utilisation d'une composition thermoplastique d'élastomère selon l'une quelconque des revendications 1 à 4 pour la production de pièces moulées élastiques et souples.

9. Procédé pour la production de pièces moulées présentant des parties rigides et des parties souples, **caractérisé en ce qu'**on utilise une composition thermoplastique d'élastomère selon l'une quelconque des revendications 1 à 4 comme composant souple et un homopolymère ou copolymère de styrène à résilience modifiée ou non modifié, un polyester ou un polycarbonate comme composant rigide dans un moulage par injection à deux composants.

10. Utilisation d'une composition thermoplastique d'élastomère selon l'une quelconque des revendications 1 à 4 pour la production de pièces moulées présentant des zones rigides et souples.

11. Pièces moulées présentant des zones rigides et souples, pouvant être obtenues selon un procédé selon l'une quelconque des revendications 5, 6, 7 ou 9.

12. Pièces moulées élastiques et souples, pouvant être obtenues selon le procédé selon l'une quelconque des revendications 5, 6, 7 ou 9.

13. Jouets, pièces de jouets, par exemple poupées et têtes de poupées, figurines d'action, anneaux de dentition, pièces de construction pour modélisme, dans le domaine des loisirs et des sports d'eau, sur des appareils de sport et de fitness, bâtons et embouts de massage, utilisations "Soft-Touch", telles que des poignées ou des apprêts antidérapants, tapis antidérapants et pieds antidérapants pour machines et appareils domestiques, garnitures de cuve de bain et de douche, à l'intérieur et dans le coffre de véhicules, joints d'étanchéité, commutateurs, boîtiers avec lèvres d'étanchéité, boutons de commande, plaques de flexographie, semelles de chaussures, tuyaux, profilés, dispositifs médicaux, tels que sets d'infusion, unités de dialyse et masques respiratoires, articles hygiéniques tels que brosses à dents, masses pour câbles, d'isolation et d'enrobage, éléments de protection contre le bruit, soufflets, cylindres ou revêtements de cylindre, cylindres antipeluches, face arrière de tapis, revêtements de sol, en particulier ceux de type linoléum, films étirables et rétractables, housses élastiques, vêtements de protection contre la pluie pouvant être obtenus selon le procédé selon l'une quelconque des revendications 5, 6, 7 ou 9.
